Europäisches Patentamt

European Patent Office

Office européen des brevets

(19)

(11) EP 0 955 745 A2

(12) EUROPEAN PATENT APPLICATION

(43) Date of publication:
10.11.1999 Bulletin 1999/45

(51) Int Cl.⁶: H04L 9/32

(21) Application number: 99303567.4

(22) Date of filing: 07.05.1999

(84) Designated Contracting States:
AT BE CH CY DE DK ES FI FR GB GR IE IT LI LU
MC NL PT SE
Designated Extension States:
AL LT LV MK RO SI

(30) Priority: 07.05.1998 GB 9809674

(71) Applicant: Hewlett-Packard Company
Palo Alto, California 94304 (US)

(72) Inventor: Chen, Liqun
Bradley Stoke, Bristol BS32 9DQ (GB)

(74) Representative:
Lawman, Matthew John Mitchell et al
Hewlett-Packard Limited,
IP Section,
Building 2,
Filton Road
Stoke Gifford, Bristol BS34 8QZ (GB)

(54) **Fair exchange of digital signatures in communications network**

(57) There is disclosed a method for facilitating fair exchange of digital signatures in an electronic communications system between a first party and a second party, including use of one or more confirmable signatures, such that either each party receives a valid digital signature of the other party, or neither party receives a valid digital signature, a method comprising a plurality of message transfers between the two parties, and wherein a trusted third party may act as a confirmer, which can independently verify the validity of a confirmable signature originating from either the first party or the second party.

Fig 5

## Description

### Technical field

The present invention relates to exchange of electronic data, particularly, although not exclusively, in the field of electronic commerce where a pair of potentially mistrusting parties exchange digital signatures between a pair of computing entities.

### Background to the invention

Electronic commerce plays an increasingly important role in modem society, and necessarily involves the transmission of electronic data between two parties.

In a commercial environment, first and second parties A and B respectively may wish to exchange electronic data over an intervening communications network, in particular the internet, in a fair and efficient way. Requirements for first and second parties A, B to exchange electronic data with each other over such a network may include a requirement for security against eavesdroppers present on the internet, that is to say parties A and B in general do not want their communications with each other to be read by any third party, and secondly a requirement that each of parties A and B can be confident that any electronic data received from the other party is actually from the corresponding party A or B, and not from some third party.

To address the first problem of guarding against eavesdroppers (the confidentiality and privacy problem), there are known encryption protocols which have been disclosed in the prior art. To address the second problem of authentication and integrity, there are known signature protocols which have been disclosed in the prior art. A third problem is to ensure that any exchanges of signature data between parties is conducted with fair fairness (the fair exchange problem). In the third problem, the basic requirement is that both parties obtain the signature data of the other party, or neither party obtains the signature data of the other party.

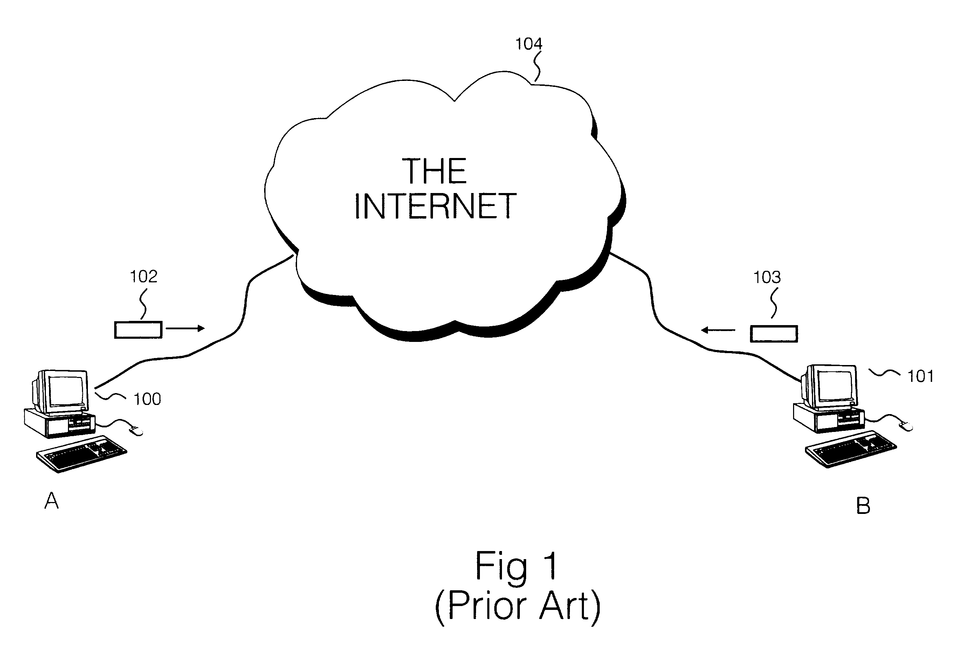

Referring to Fig. 1 herein there is illustrated schematically the fair exchange problem between first and second parties A, B using respective first and second computing entities 100, 101. First and second parties A, B respectively may wish to exchange corresponding electronic data messages 102, 103 respectively with each other over an intermediate communications network, in particular the internet 104.

Imagine the following scenario that may happen in, for instance, the signing of electronic contracts and purchase of electronic goods between the parties A, B. Two parties A and B respectively need to exchange their digital signatures on agreed messages, but neither party wants to send his/her signature before obtaining the signature of the other party, because the two parties A, B do not trust each other. The basic requirement for A and B on the fairness of exchanging signatures is that either each of them gets each other's signature, or neither of them gets the other's signature. A situation in which one party obtains the signature of the other party, without having to disclose their own signature would result in one party gaining an unfair advantage over the other and is therefore unsuitable for use in an environment where a basic premise is that parties A and B do not trust each other.

In a prior art method for the realization of fair exchange of electronic signatures, the two parties 'simultaneously' disclose messages over many steps. Two particular prior art mathematical models for realizing simultaneous disclosure of messages have been proposed as follows.

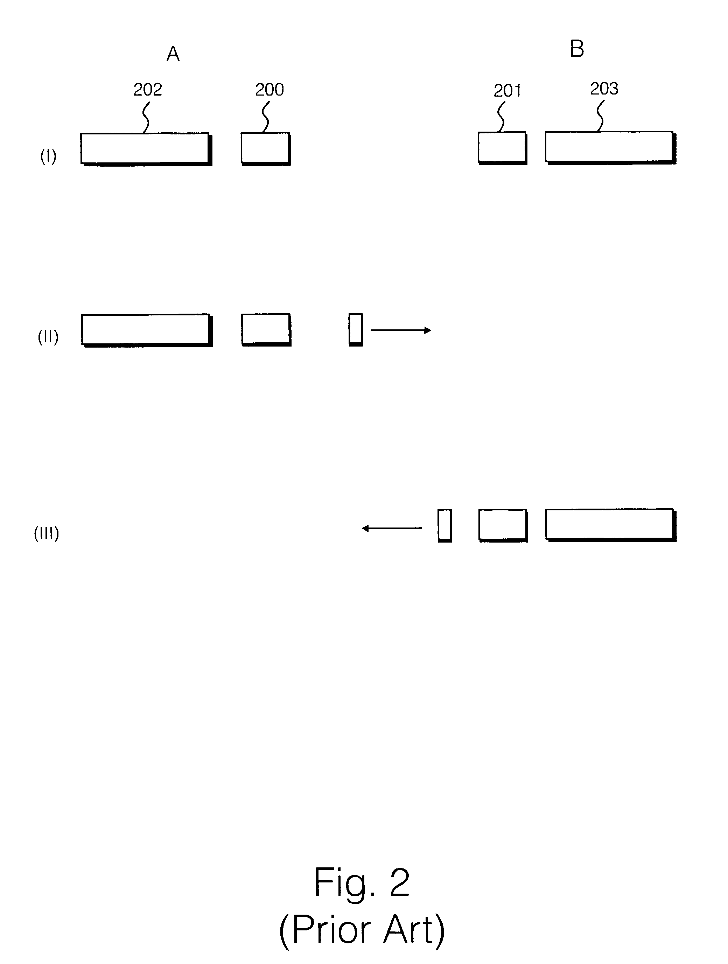

In a first model, a computational approach is applied. Examples of computational models include: "Controlled gradual disclosure schemes for random bits and their applications" R Cleve, in Advances in Cryptology - Crypto '89 LNCS 435, Springer-Verlag 1990 pages 572-588; "Practical and provably secure release of a secret and exchange of signatures" I Damgard in Advances in Cryptology - Eurocrypt '93 LNCS 765, Springer-Verlag 1994 pages 201-207; "A randomized protocol for signing contracts" S Even, O Goldreich, A Lempel in CACM.28(6) 1985 pages 637-647; "How to simultaneously exchange a secret bit by flipping symmetricall-based coin" M Luby, S Micali, C Rackoff in Proceedings of the 24th IEEE Symposium on the Foundations of Computer Science (FOCS) 1983 pages 11-22; "How to simultaneously exchange secrets by general assumption" T Okamoto, K Ohta in Proceedings of second ACM Conference on Computer and Communications Security 1994 pages 184-192; "Fair exchange of secrets" T Tedric in Advances in Cryptology - Crypto '84 LNCS 196 Springer-Verlag 1985 pages 434-438. In this basic approach as illustrated schematically in Fig. 2 herein, first and second parties A, B, each append their own digital signature data 200, 201 respectively to their respective electronic data messages 202, 203 prior to exchange of data. First and second parties A, B exchange their digital signatures with each other (or agreed secret messages) piece by piece one bit at a time where each bit received is verifiable, so at any stage of the exchange, instead of one party having received the digital signature of the other party, without having yet transmitted its own digital signature, because the digital signatures are exchanged on a bit by bit basis, one party can only gain an advantage of an extra bit of information over the other party, and the correctness of each bit is verifiable at all stages of the exchange. If both parties follow the approach correctly, they will each receive the other party's signature at the end of a successful exchange. If either party aborts the exchange at any stage, the aborting party will at most obtain one more bit than the other corresponding party. The extra bit does not result in a significant advantage in finding the remaining secret bits which are as yet unexchanged. A virtue of this model is that first and second parties A, B can sort out the fair exchange problem without any intervention of a third party. However, the approach has two main disadvantages: firstly, the model is based on the assumption that parties A and B have equal computing power. However, in practice this assumption may not be realistic, and not desirable. Secondly, the model suffers from poor performance. Many individual transmissions (usually hundreds) must take place between the first and second parties in order to effect a fair exchange of digital signatures.

In a second known model, known as a probabilistic model for exchanging signatures on an agreed message, first and second parties A, B sign and exchange many signatures on different events. Examples of known probabilistic models include: "A fair protocol for signing contracts" M Ben-Or, O Goldreich, S Micali, R Rivest in IEEE Transactions on Information Theory 36(1) 1990 pages 40-46; and "Transaction protection by beacons" M Rabin in Aiken Computation Lab. Harvard University Cambridge, MA, Tech. Rep. 1981 pages 29-81. Each event has a small probability binding with the agreed message. In order to increase the probabilities of their commitment to the message, each party has to exchange a great number of signatures with the other. This approach removes the requirement on equal computing powers between first and second parties A, B, but has the disadvantage of needing the intervention of a third party in a weak form. In a known probabilistic method of transaction protection by beacons, ('Transaction protection by beacons', M.Rabin, Aiken Computation Lab, Harvard University, Cambridge, Massachusetts Technical Report 1981 pages 21-81), an active third party defines events by broadcasting a random number each day. In another known method ('A fair protocol for signing contracts', M Ben-Or, O Goldreich, S Micali, R Rivest, IEEE Transactions on Information Theory 36(1) 1990 pages 40-46) a passive third party is evoked only when a dispute between first and second parties A and B occurs, to arbitrate the dispute according to a simple computation on events. Similarly to the first type of model referred to herein above, a major drawback of the second model approach is poor performance.

In order to address the problems of communicational and computational cost during simultaneous disclosure of messages, recent prior art research on fair exchange of digital signatures data has proposed a variety of interventions from a 'trusted third party' (TTP) which can be available either on-line or off-line to parties using the TTP.

Examples of on-line approaches include the following: 'NetBill security and transaction protocol', B Cox, J Tygar, J Sirbu in Proceeding of First USENIX Workshop on Electronic Commerce pages 77-88; 1995; 'Practical protocol for certified electronic mail', R Deng, L Gong, A Lazar, W Wang, Journal of Network and Systems Management 4(3), pages 279-297, 1996; 'Fair exchange with a semi-trusted third party', M Franklin, M Reiter, in Proceedings of 4th ACM Conference on Computer and Communications Security, Zurich, Switzerland pages 1-5, April 1997; and 'A fair non-repudiation protocol', J Zhou, D Gollmann in Proceedings of the 1996 IEEE Symposium of Security and Privacy, IEEE Computer Press pages 55-61, Oakland, California 1996. In an on-line TTP based approach, the TTP who acts as a mediator between first and second parties A, B checks the validity of every transaction and then forwards correct data to the first and second parties. A major disadvantage in this approach is that the trusted third party is always involved in the exchange, even if both first and second parties A, B are honest and no fault occurs. This results in a large cost of maintaining availability of the on-line trusted third party.

A number of off-line TTP based approaches are known in the prior art. In these approaches, the trusted third party does not take part in normal exchanges of digital signatures, but becomes involved only where dishonest parties do not perform properly, or whether a fault occurs. Examples of such known systems are as follows: 'Optimistic protocols for fair exchange', A Asokan, M Schunter, M Waidner in Proceedings of 4th ACM Conference on Computer and Communications Security, Zurich, Switzerland pages 6-17, April 1997; 'An efficient non-repudiation protocol', J Zhou, D Gollmann in Proceedings of 10th IEEE Computer Security Foundations Workshop pages 126-132, Rockport, Massachusetts, 1997. In these off-line TTP approaches, a trusted third party provides either of the following two services to guarantee the fairness; (1) the trusted third party is able to undo a transfer of an item and/or produce a replacement for it, or (2) when a misbehaving party gets the other party's data, and refuses to give his/her own data, the trusted third party will issue affidavits attesting to the events which have occurred. However, there are not many applications to which these trusted third party services are suited.

A more recent prior art proposal for a novel off-line trusted third party based approach uses a verifiable public key encryption to ensure fairness of signature exchanges. This system is disclosed in 'Efficient and practical fair exchange protocols with off-line TTP', F Bao, R Deng, W Mao, in Proceedings of 1998 IEEE Symposium on Security and Privacy, Oakland, California, IEEE Computer Press 1998 pages 77-85; and 'Optimistic fair exchange of digital signatures', A Asokan, V Shoup, M Waidner in Advances in Cryptology - Eurocrypt '98, LNCS 1403, Springer-Verlag (1998) pages 591-606. In the disclosure 'Efficient and practical fair exchange protocols with off-line TTP' first party A first encrypts her ordinary signature under the trusted third party's public key, and convinces a second party B of the correctness of the encryption via an interactive Zero Knowledge Proof. Then, the second party B, sends his ordinary signature to the first party A, and first party A returns her ordinary signature back to second Party B. If second party B does not receive first party A's signature correctly, second party B sends first party A's encrypted signature and his own ordinary signature to the trusted third party. The trusted third party performs a corresponding decryption, and checks the validity of both signatures. If the validity of both signatures is confirmed by the trusted third party, the TTP will forward the second party B's signature to the first party A, and vice versa, send the first party A's signature to second party B.

However, there is a problem with these known methods of zero knowledge proof, because there is no prior art zero knowledge proof which is capable of verifying an encrypted signature fully, and first party A and second party B need to communicate with each other many times in order to implement the zero knowledge proof.

In the disclosure 'Optimistic fair exchange of digital signatures', the approach used is based on a primitive, called a *homomorphic inverse of a signature'*. For example, this may be a dis-log for digital signature standard (DSS) and Schnorr signatures and an RSA inverse for RSA signatures. DSS signatures are disclosed in: 'Digital signature standard' US department of commerce/national institute of standards and technology, federal information processing standard publication (Fips Pub) 186, May 1994. Schnorr signatures are disclosed in 'Efficient identification and signatures for smart cards' C Schnorr, in Advances in Cryptology - Eurocrypt '89, LNCS 435 pages 239-253 Springer-Verlag 1990. RSA signatures and their inverses are disclosed in: 'A method for obtaining digital signatures and public key cryptosystems', R L Rivest, A Shamir, L Adleman in Communications of the ASM, 21 pages 294-299, 1978. In this approach, a first party A and a second party B first reduce a 'promise' of a signature to a 'promise' of a particular homomorphic inverse. Then, first and second parties A, B encrypt their promised inverses under the trusted third party's public key and convince each other of the correctness of the encryption in a non-transferable way. Once each party is convinced of encryption, they each disclose their promised inverses. If either party (say second party B) does not receive a correct inverse of the other party, first party A, second party B will send the encryptic homomorphic inverse of first party A, and a promised inverse of his own signature to the trusted third party. The trusted third party decrypts and checks the validity of both signatures. After the trusted third party has performed a series of checks, the TTP sends the first party A's inverse signature to second party B, and then records second party B's signature for possible use by first party A. However, the idea of using verifiable encryption in an off-line TTP based fair exchange is difficult to implement in an efficient and generic manner, because so far, there has not been known a generic and efficient construction of publicly verifiable encryption. A recent, and best prior art solution to an efficient construction of publicly verifiable encryption is based on an inefficient 'cut and choose' method as disclosed in 'Publicly verifiable secret sharing' M Stadler, in 'Advances in Cryptology - Eurocrypt '96, LNCS 1070 Springer-Verlag (1996) pages 190-199. However, despite this prior art solution, the problem of how to design an efficient and generic construction of publicly verifiable cryptographic systems still remains and is a hard open problem.

In order to improve the efficiency of the approach disclosed in 'Publicly verifiable secret sharing', in the disclosure 'Efficient and Practical Fair Exchange Protocols with off-line TTP' there was recommended the use of a modified Guillou-Quisquater signature algorithm (as disclosed in 'A paradoxical identity-based signature scheme resulting from zero knowledge', L Guillou, J Quisquater in Advances in Cryptology - Crypto '88 LNCS 403, pages 216-231, Springer-Verlag 1990, with the ElGamal encryption algorithm as disclosed in 'A public key cryptosystem and a signature scheme based on discrete logarithms' T ElGamal, IEEE Transactions on Information Theory, 31 (4) pages 469-472, 1985). However, the modified Guillou-Quisquater signature algorithm is not a standard signature algorithm. This protocol was recently attacked by Boyd and Foo in 'Off-line fair payment protocols using confirmable signatures', - Asia Crypt '98 LNCS 1514 Springer-Verlag 1998 pages 271-285, as the verifier is able to obtain the signer's signature without the help of a trusted third party. For a more closed look at the properties of fair exchange, there is another problem in this protocol, that the encrypted signature cannot be simulated.

In 'Optimistic fair exchange digital signatures' herein before described, there was proposed a solution known as 'off-line coupons' where each party needed to retrieve a trusted third party's coupons before starting a fair exchange protocol. However, this approach has the problem of increasing the cost for maintaining availability and security of the off-line trusted third party service.

So far, none of the above approaches have produced an efficient and widely acceptable approach for fair exchange of digital signatures over the internet. Previous work on fair exchange of digital signatures has not produced an efficient approach that would be widely acceptable in electronic commerce.

## Summary of the Invention

This disclosure relates to a new efficient protocol for fair exchange of digital signatures between two potentially mistrusting parties. In the protocol, a TTP, acting as a designated confirmer, is needed only when one of the exchange parties does not follow the protocol properly or if a fault occurs. Specific examples of the protocol have a practical level of performance: only a moderate number of communication rounds (e.g. 5 rounds for a normal procedure) and ordinary signatures (e.g. two Schnorr signatures for a confirmable signature and one Schnorr signature for a normal confirmation service) are required. The protocol methods may be suitable for many electronic commerce applications over the Internet, such as contract signing and electronic purchase. A fairness property of the protocol is based on verifiable confirmation of digital signatures.

According to first aspect of the present invention there is provided a method for facilitating fair exchange of digital signatures in an electronic communications system between a first party and a second party including use of one or more confirmable signatures, such that either each party receives a valid digital signature of the other party, or neither party receives a valid digital signature, said method comprising a plurality of message transfers between the two parties, and wherein a trusted third party may act as a confirmer, which can independently verify the validity of a confirmable signature originating from either the first party or the second party.

Said method may include the steps of:

(a) said first and second parties agreeing to exchange their digital signatures, at least one of the first and second parties generating and transferring to the other party a confirmable signature, and the originating party of the confirmable signature and the receiving party of the confirmable signature running a non-transferable protocol to convince the receiving party of the confirmability of the confirmable signature; and

(b) if the exchange of the two digital signatures is not completed, the receiving party requesting said trusted third party to take action as a designated confirmer, which can independently verify and make a confirmation of the validity of the confirmable signature of the originating party, to complete the exchange.

Said method may include the steps of:

(a) the first party generating and transferring to the second party a confirmable signature;

(b) the first party and the second party running a non-transferable protocol to convince the second party of the confirmability of the confirmable signature;

(c) once convinced of the confirmability of the confirmable signature, the second party returning to the first party a digital signature of the second party; and

(d) the first party verifying the digital signature of the second party and returning to the second party a digital signature of the first party,
      wherein, if step (d) above is not completed, the method includes the steps of:

(e) the second party transferring to a trusted third party a message including its own digital signature and a confirmable signature of the first party; and

(f) the trusted third party;

   verifying the digital signature of the second party, and the confirmable signature of the first party;
   returning to the second party a message including a digital signature of the third party indicative of the validity of the confirmable signature of the first party; and

(g) transmitting a message to the first party including the digital signature of the second party.

Suitably, the method allows the first party to invoke a trusted third party not to provide the confirmation service before both the first party and second party receive valid digital signatures of each other, and may include the steps of:

(a) the first party generating and transferring to the second party a confirmable signature, the first party and second party running a non-transferable protocol to convince the second party of the confirmability of the confirmable signature of the first party;

(b) once convinced of the confirmability of the confirmable signature of the first party, the second party generating and transferring to the first party a confirmable signature, the second party and first party running a non-transferable protocol to convince the first party of the confirmability of the confirmable signature of the second party;

(c) once convinced of the confirmability of the confirmable signature of the second party, the first party returning to the second party a digital signature of the first party;

(d) the second party verifying the digital signature of the first party and returning to the first party a digital signature of the second party; and

wherein, if any steps (a), (b), (c) and (d) above are not completed, the method includes the steps of:

(e) the first party asking a trusted third party to invoke an abort if the first party wishes to abort, and the trusted third party maintaining an abort record;

(f) either of the first party or second party transferring to the trusted third party a message including its own digital signature and the confirmable signature of the other parties; and

(g) the trusted third party:

(i) checking whether or not there is an abort record; and

(ii) if there is an abort record, the trusted third party not providing a confirmation service; or

(iii) if there is no abort record, the trusted third party:

verifying the digital signature of the transferring party and the confirmable signature of the other party;
returning to the transferring party a message including a digital signature of the trusted third party indicative of the validity of the confirmable signature of the other party; and
transmitting a message to the other party including a digital signature of the transmitting party.

The invention includes a confirmable signature suitable for use with a method according to any one of the preceding claims, wherein the confirmable signature includes a validity statement and includes the properties of:

(a) the validity statement is the equality of two discrete logarithms that can be independently verified for confirmability by the originating party of the confirmable signature and the trusted third party;

(b) when bound with the validity statement, the confirmable signature is universally verifiable;

(c) without the validity statement, no binding between the originating party of the confirmable signature and the confirmable signature can be claimed; and

(d) a private key/public key pair of each party, including the first party, the second party and the trusted third party is selected from a common large prime order group.

The invention includes a method of generating a confirmable signature as described above.
The invention includes the method as described above used in either one of the following scenarios;

(a) the first party and second party sign and exchange a same agreed message; or

(b) the first party and second party sign and exchange two different agreed messages, wherein each message includes an indicator of the other message.

Said messages may be plaintext or ciphertext.
According to a second aspect of the present invention, there is provided a method of exchanging digital signature data between first and second parties, said method comprising the steps of:

sending a first digital signature data between said first party and said second party said first digital signature data being a data which is universally verifiable as being a signature data of a signing party without identifying said signing party;

establishing that said first digital signature data is in fact a confirmable digital signature data of said signing party by implementing a zero knowledge proof of said first digital signature data;

sending a second digital signature data between said first and second parties, said second digital signature data being an ordinary signature of one of said parties; and

sending a third digital signature data between said first and second parties, said third digital signature data being an ordinary signature of the other one of said first and second parties.

A said first party may send and receive said data via a first computing entity, and said second party may send and receive data via a second computing entity.

According to a third aspect of the present invention there is provided a method of exchanging digital signature data between first and second parties, said method comprising the steps of:

sending a first confirmable digital signature data of said first party from said first party to said second party;

sending said first confirmable digital signature data to a trusted third party;

sending a second ordinary digital signature data, of said second party to said trusted third party;

said trusted third party sending a first statement data relating to said first confirmable signature data to said second party, said statement data comprising data capable of providing a first universally verifiable digital signature data of said first party when combined with said first confirmable digital signature data; and

sending said second ordinary digital signature data of said second party to said first party.

Said method may further comprise the steps of:

said second party receiving said first statement data relating to said first confirmable signature data of said first party; and

said second party obtaining from said first confirmable signature data, and said statement of said first confirmable signature data, said first universally verifiable digital signature data of said first party.

Preferably said step of sending said statement data of said first confirmable signature data and said step of sending said ordinary signature data of said second party occur substantially simultaneously.

Preferably said first party sends and receives data at a first computing entity, said second party sends and receives data at a second computing entity, and said third party sends and receives data at a third computing entity.

The invention includes a method of effecting a fair exchange of digital signature data between first and second computing entities, said method comprising the steps of:

generating a confirmable digital signature data of said first entity;

sending said confirmable digital signature data to said second entity;

said first and second entities verifying said confirmable digital signature data as being true by means of a zero knowledge proof protocol;

generating an ordinary digital signature data of said second entity;

sending said ordinary digital signature data of said second entity to said first entity;

generating an ordinary digital signature data of said first entity; and

sending said ordinary digital signature data of said first entity to said second entity.

The invention includes a system of co-operating computing entities, each said computing entity comprising a data processing means, a memory means, and a communications means, said system configured such that said plurality of computing entities co-operate with each other such that:

a first entity generates a digital confirmable signature data relating to said first entity;

said first entity sends said digital confirmable signature data to a second entity;

said first and second entities co-operate with each other to verify said digital confirmable signature data as being true by means of a zero knowledge proof protocol;

said second entity generates an ordinary digital signature data relating to said second entity;

said second entity sends said ordinary digital signature data to said first entity;

said first entity generates an ordinary digital signature data relating to said first entity; and

said first entity sends said ordinary digital signature data of said first entity to said second entity.

According to a fourth aspect of the present invention, there is provided a computing entity comprising:

a data processing means;

a memory means; and

a communications means,

said data processing means configured so as to be capable of processing data according to a set of pre-configured instructions stored in said memory means; and

said communications means configured so as to communicate data according to said set of pre-configured instructions such that said computing entity is capable of:

generating a confirmable digital signature data of a first party;

sending said confirmable digital signature data of said first party to a second party;

communicating with said second party to verify to said second party by means of a zero knowledge proof protocol that said confirmable signature data of said first party is a confirmable signature;

receiving a confirmable digital signature data sent from said second party;

communicating with said second party to establish a validity of said confirmable digital signature data of said second party by means of a zero knowledge proof protocol;

generating an ordinary digital signature data relating to said first party;

sending said ordinary digital signature data of said first party to said second party; and

receiving an ordinary digital signature data of said second party.

Preferably said computing entity is further configured so as be capable of checking that said ordinary digital signature data of said second party is a valid signature data.
Preferably said computing entity is further configured such that:

if said computing entity is unable to establish that said confirmable digital signature data of said second party is a confirmable digital signature said entity generates an ordinary signature data of said first party; and

sends said ordinary digital signature data of said first party and said confirmable digital signature data of said second party to a third party.

Preferably said computing entity is further configured for:

checking said ordinary digital signature data of said second party to see if said digital signature data is valid; and

if said ordinary digital signature data of said sending second party is determined to be invalid; sending said confirmable digital signature data of said second party and said ordinary digital signature of said first party to a third party.

Preferably said computing entity is further configured for:

receiving a statement of confirmable digital signature data from a third party;

processing said confirmable digital signature data of said second party, and said statement of confirmable digital signature data received from said third party, to determine a universally verifiable digital signature data of said second party.

The invention includes an algorithm for controlling a computer entity said algorithm comprising a set of instructions to a data processor device for:

generating a confirmable digital signature data of a first party;

sending said confirmable digital signature data of said first party to a second party;

communicating with said second party to verify to said receiving party that said confirmable signature data is a confirmable signature, by an interactive zero knowledge proof protocol;

receiving a confirmable digital signature data from said second party;

communicating with said second party to establish that said confirmable digital signature data of said second party is a confirmable signature;

generating an ordinary signature data of said first party;

sending said ordinary digital signature to said second party; and

receiving an ordinary digital signature of said second party.

Preferably said algorithm further comprises instructions to check that a said ordinary digital signature data is a valid signature data.
Preferably said algorithm further comprises instructions to:

if said confirmable digital signature data of said second party is not verified as being a confirmable signature, generate an ordinary signature data of said first party; and

send said ordinary signature data of said first party and said confirmable digital signature data of said second party to a third party.

Preferably said algorithm further comprises instructions to:

check said ordinary digital signature data of said second party to see if said digital signature data of said second party is valid; and

if said ordinary digital signature data of said second party is determined to be invalid, sending said confirmable digital signature data of said second party, and said ordinary digital signature of said first party to a third party.

Preferably said algorithm further comprises instructions to:

receive a statement of confirmable digital signature data from a third party ;

process said confirmable digital signature data of said second party, and said statement of confirmable digital signature data received from said third party, to determine a universally verifiable digital signature data of said second party.

According to a fifth aspect of the present invention there is provided a computer entity comprising:

a data processing means;

a memory means; and

a communications means,

said data processing means configured so as to be capable of processing data according to a set of pre-configured instructions stored in said memory means, and said communications means configured so as to communicate data according to said set of pre-configured instructions such that said computing entity is capable of operating as follows:

receiving a confirmable digital signature data of a first party;

receiving an ordinary digital signature data of a second party;

checking a validity of said confirmable digital signature data;

checking a validity of said ordinary digital signature data;

generating a statement of said confirmable digital signature data;

sending said statement of confirmable digital signature data to said second party; and

sending said ordinary signature of said second party, to said first party.

Preferably the computing entity is configured to:

send said statement of confirmable digital signature data to said second party, and send said ordinary signature data of said second party to said first party substantially simultaneously.

Preferably the computing entity is further configured to operate to:

check a validity of said ordinary digital signature data of said second party, received from said second party.

The invention includes an algorithm for controlling a computer entity said algorithm comprising a set of instructions for:

receiving a confirmation digital signature data relating to a first party;

receiving an ordinary digital signature data relating to a second party;

checking a validity of said confirmable digital signature data;

checking a validity of said ordinary digital signature data;

generating a statement of said confirmable digital signature data;

sending said statement of confirmable digital signature data to said second party; and

sending said ordinary signature of said receiving second party, to said first party.

Preferably, the algorithm comprises instructions such that:

sending said statement of confirmable digital signature data to said second party, and said step of sending said ordinary signature data of said second party to said sending first party occur substantially simultaneously.

Preferably, the algorithm comprises instructions to check a validity of said ordinary digital signature data of said second party, received from said second party.
According to a sixth aspect of the present invention there is provided a system of digital data signals for communications between a plurality of computer entities, said system of digital data signals comprising:

a confirmable digital signature data, said confirmable digital signature data comprising data which is capable of being verified as being data representing a signature of a party without identifying said signing party; and

a validity statement of confirmable digital signature data, said validity statement comprising data comprising information which confirms said confirmable digital signature data has been signed by said party.

Preferably said validity statement of said confirmable digital signature is signed by using a secret key data of a trusted third party.

The invention includes a signature issuance procedure between first and second parties A and B, consisting (i) first party A generating a confirmable signature data of A, $Csig_A(m)$; and (ii) first party A demonstrating to second party B that $Csig_A(M)$ is a confirmable signature on a message m, wherein;

$p$ is a prime number,

$q$ is another prime which divides $p$-1;

$G = <g>$ is a subgroup of $Z^*_p$ of order $q$, in which computing discrete logarithms is infeasible;

$h()$ denotes a one-way hash function; and

$a \in_R N$ denotes a choice of an element a from a set $N$ at random according to a uniform distribution;

first party A, as a signer, has a secret and public key pair, denoted by $(S_A, P_A)$;

a third party C has another secret and public key pair, denoted by $(S_C, P_C)$, wherein said two key pairs are generated as follows:

first party A chooses $x \in_R Z^*_q$ as $S_A$, and computes $P_A = (g, y)$ where $y = g^x \bmod p$;

third party C chooses $w \in_R Z^*_q$ as $S_C$, and computes $P_C = (g, z)$ where $z = g^w \bmod p$;

to generate said confirmable signature of first party A, $CSig_A(m)$, first party A chooses $u \in_R Z^*_q$, and computes $\tilde{y} = y^u \bmod p$ and $\hat{y} = z^{xu} \bmod p$;

first party A generates a signature on a message $m$ signed using $u$ and $ux$ as private keys;

a Schnorr signature is used such that

$$k_1, k_2 \in_R Z^*_q, \ r_1 = y^{k_1} \bmod p, \ r_2 = z^{k_2} \bmod p,$$

$$c = h(m, r_1, r_2), \ s_1 = k_1 - uc \bmod q, \ s_2 = k_2 - uxc \bmod q,$$

$$CSig_A(m) = (c_1 \ s_1, \ s_2);$$

and

said signature is verified by checking whether

$$c = h(m, \ y^{s_1}\tilde{y}^c, z^{s_2}\hat{y}^c)$$

is true,

said confirmable signature has a validity statement

$$\log_{\bar{y}} \hat{y} = \log_g z \ (\text{mod } q).$$

## Brief Description of the Drawings

For a better understanding of the invention and to show how the same may be carried into effect, there will now be described by way of example only, specific embodiments, methods and processes according to the present invention with reference to the accompanying drawings in which:

Fig. 1 illustrates schematically a fair exchange problem between first and second computing entities;

Fig. 2 illustrates schematically a prior art exchange of digital signatures between first and second parties;

Fig. 3 illustrates schematically first and second computing entities communicating with each other over an intermediate communication as a medium, with a third computing entity acting as a trusted third party, according to a first specific implementation of the present invention;

Fig. 4 illustrates schematically physical and logical resources of the computing entities illustrated in Fig. 3;

Fig. 5 illustrates schematically a first protocol method according to first specific implementation of the present invention;

Fig. 6 illustrates schematically process steps carried out in the first protocol method;

Fig. 7 illustrates schematically further operation of the first protocol method;

Fig. 8 illustrates schematically further process steps of the first protocol method;

Fig. 9 illustrates schematically a second protocol method according to second implementation of the present invention, the second protocol method being a variation of the first protocol method disclosed herein;

Fig. 10 illustrates schematically process steps carried out according to the second protocol method;

Fig. 11 illustrates schematically process steps operated by a first computing entity A for generation of a confirmable signature using private keys according to a third specific implementation of the present invention;

Fig. 12 illustrates schematically process steps carried out by first entity A for demonstrating a statement of confirmable signature to a second entity B according to the third specific implementation of the present invention; and

Fig. 13 illustrates schematically process steps carried out by second computing entity B for obtaining and accepting confirmation of a confirmable signature as being valid.

## Detailed Description of the Best Mode for Carrying Out the Invention

There will now be described by way of example the best mode contemplated by the inventors for carrying out the invention. In the following description numerous specific details are set forth in order to provide a thorough understanding of the present invention. It will be apparent however, to one skilled in the art, that the present invention may be practiced without limitation to these specific details. In other instances, well known methods and structures have not been described in detail so as not to unnecessarily obscure the present invention.

In this disclosure, the inventor presents a new approach for fair exchange of digital signatures which uses verifiable confirmation of signatures in place of the known prior art verifiable encryption of signatures. The system of verifiable confirmation of signatures disclosed herein can be used to provide off-line TTP based fair exchange.

The contribution of this disclosure is organised as two parts. In the first part there is disclosed according to a first specific implementation of the present invention, a new off-line TTP modelled fair exchange protocol which is based on a cryptographic primitive, called *confirmable signatures* to guarantee the fairness. In this protocol, the TTP acts as a designated confirmer. There is no restriction for the protocol as to which confirmable signature scheme will be used. Various prior art confirmable signatures may be used, for example as disclosed in "designated confirmer signatures" D. Chaum, in advantage in cryptography - Eurocrypt '94, LNCS 950, Springer Verlag 1994 pages 86 to 91.

The use of existing constructions of verifiable confirmation are much more efficient and generic than those of verifiable encryption disclosed in the prior art.

In the second part, there is disclosed according to a second specific implementation of the present invention, a new realization of confirmable signatures which is constructed by using a family of discrete logarithm problem based digital signature algorithms. The confirmable signature realization according to the second implementation is suitable for use in the fair exchange protocol proposed in the first implementation although the fair exchange protocol disclosed in the first implementation is not dependent on the second implementation, but may use prior art confirmable signature methods.

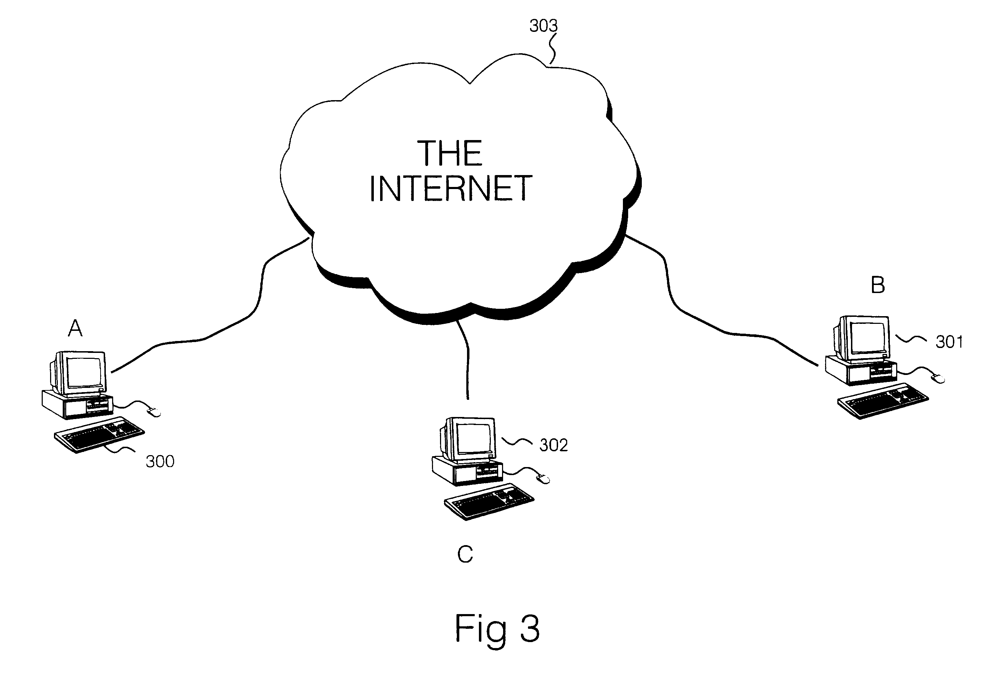

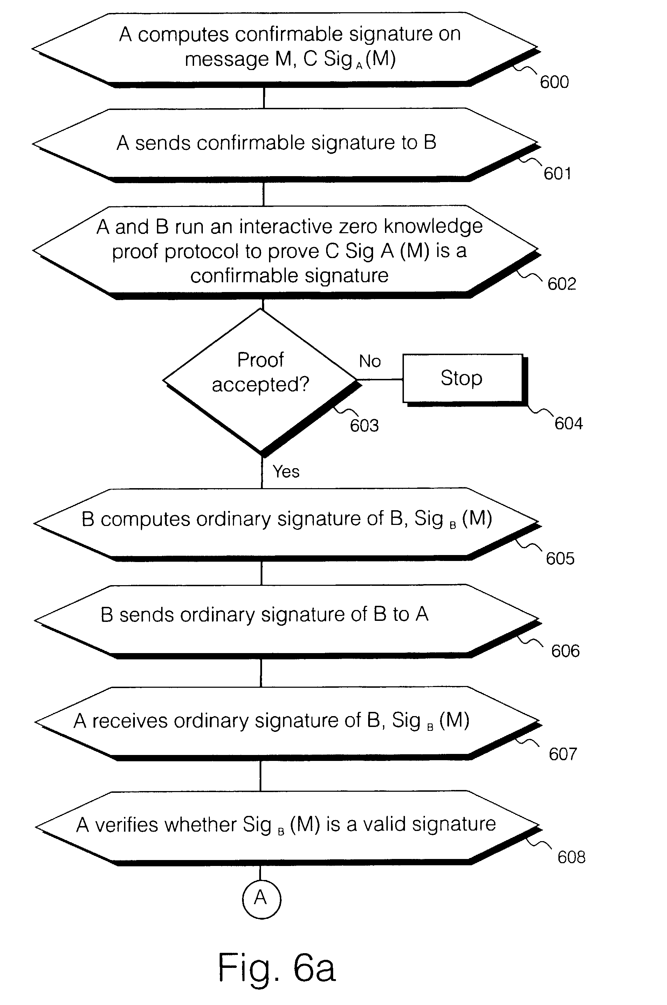

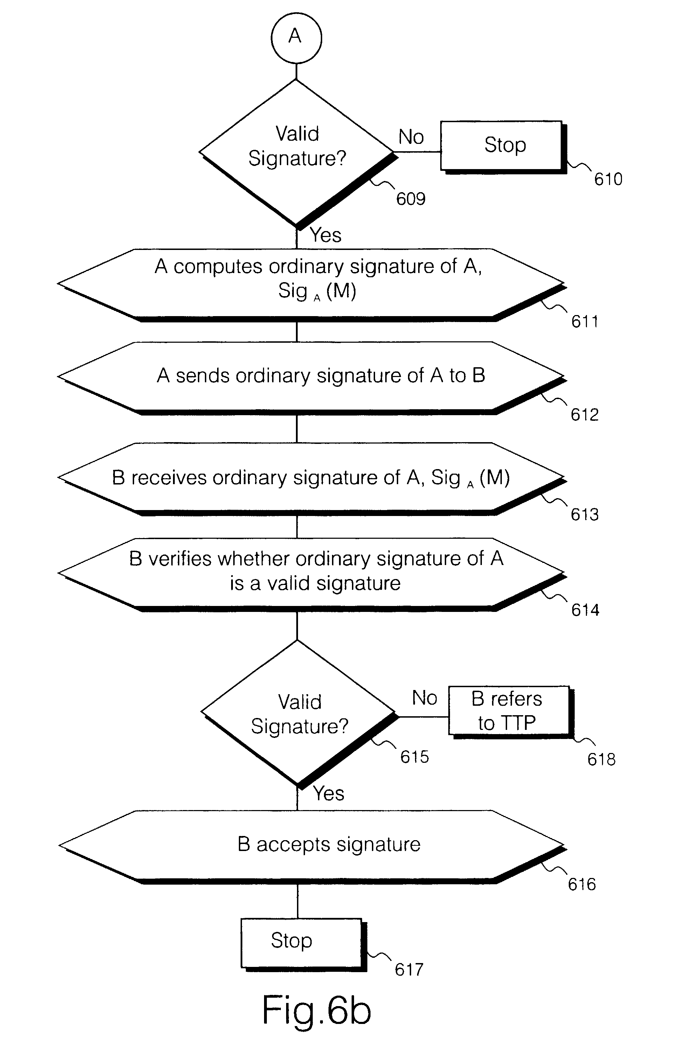

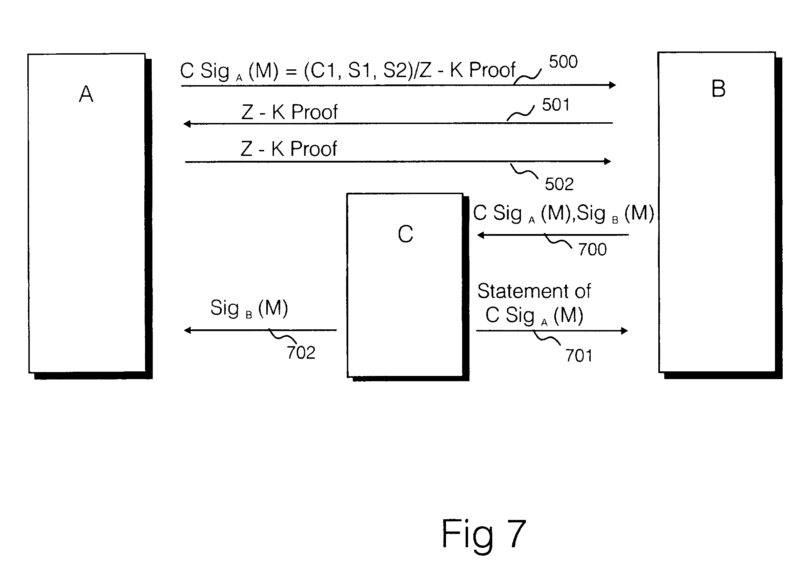

There will now be described with reference to Figs. 3 to 7 herein a method and apparatus for exchange of digital signature data according to a fair exchange protocol, which includes an off-line trusted third party entity, according to the first specific implementation of the present invention.

Referring to Fig. 3 herein, there is illustrated schematically a plurality of computing entities configured for communicating electronic data with each other over a communications network, for example the internet. Illustrated in Fig. 3 is first computing entity 300, herein after referred to as entity A, second computing entity 301 herein referred to as entity B, and third computing entity 302, herein after referred to as entity C. The plurality of computing entities are linked to communicate with each other over the internet which is shown schematically 303.

In the example illustrated in Fig. 3. herein, the first, second and third computing entities are geographically remote from each other and communicate via an intermediate communications network. Whilst in the best mode herein, the communications network comprises the known internet, in other embodiments and implementations of the present invention, the communications network comprises any equivalent means of transmitting digitized data between the computing entities. For example, a known Ethernet network, local area network, wide area network, virtual private circuit or public telecommunications network may form the basis of a communications medium between the computing entities.

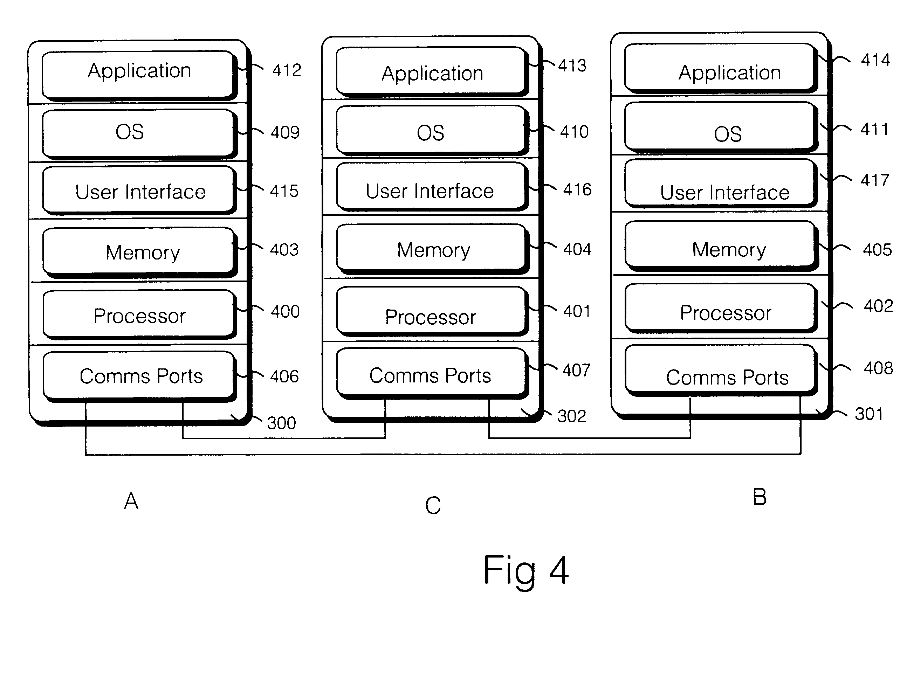

Referring to Fig. 4 herein, there is illustrated schematically physical resources and logical resources of the computing entities. Each computing entity comprises at least one data processing means 400-402, a memory area 403-405, a communications port 406-408, for communicating with other computing entities; an operating system 409-411, for example a known Unix operating system; and one or more applications programs 412, 413, 414 configured for operating for receiving, transmitting, and performing data processing on electronic data received from other computing entities, and transmitted to other computer entities in accordance with specific methods of the present invention; and, optionally, a user interface 415-417 which may comprise a visual display device, a pointing device, e.g. a mouse or track-ball device, a keypad, and a printer.

Under control of the respective application programs 412, 413, 414, the computing entities 300, 301, 302 are configured to operate according to a first specific method of the present invention in which digital signatures are exchanged between first and second computing entities A, B, with third computing entity C acting as an off-line trusted third party.

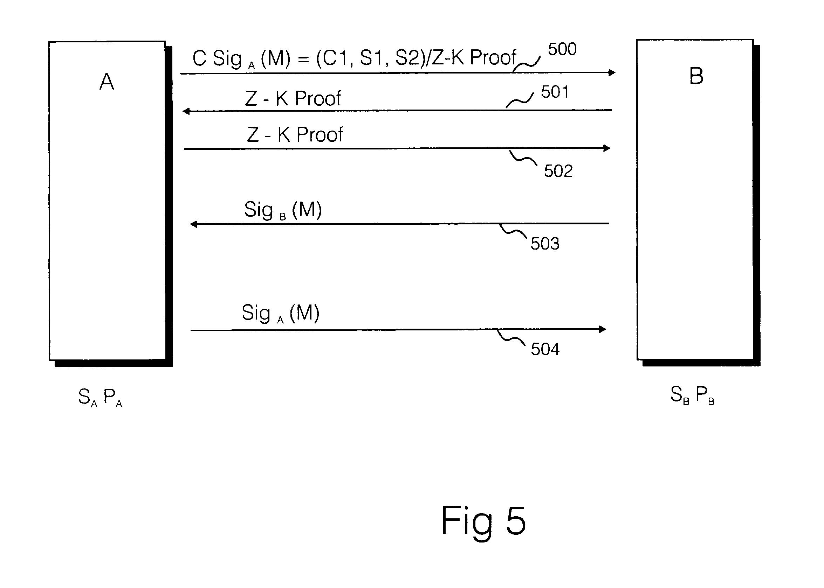

Referring to Fig. 5 herein, there is illustrated schematically messages passed between the first and second computing entities to effect a fair exchange of digital signature data between first party A and second party B according to the first specific implementation of the present invention.

A fair exchange protocol allows the pair of parties A, B to exchange digital signatures with the off-line TTP's intervention in a fair manner. The protocol involves three parties, the two exchange parties, A (A) and B (B), plus the off-line TTP, C (C), who acts as a designated confirmer. Each of these parties has a secret and public key pair denoted by $S_x$ and $P_x$ respectively (where $X \in \{A, B, C\}$), which is used for digital signature and verification. There may be provided a secure binding between each party's identity and the corresponding public key. Such a binding may be in the form of a public key certificate issued by a certification authority. Further, the communication channels between these three parties may be protected to guarantee integrity and confidentiality.

Applications programs 412, 413, 414 operate a set of algorithms which effect implementation of the fair exchange protocol. The precise implementation of the algorithms is preferably made in a conventional prior art programming language, for example the language C, or C++ using conventional programming techniques which are known to those skilled in the art. For a better understanding of the implementation of the algorithms, the following presents a model, notation and explanation of the fair exchange protocol. It will be understood by those skilled in the art that the algorithmic steps are used to control the logical and physical resources of the computing entities by being programmed into the applications in a conventional programming language.

Operation of the protocol is based upon the generation of a confirmable signature, together with the generation of a statement of the confirmable signature, wherein a knowledge of the confirmable signature and the statement of the confirmable signature is equivalent to a knowledge of the ordinary full signature of a party. The confirmable signature comprises a signature data which is recognisable and verifiable by a receiving party as being a signature, but without the receiving party being able to tell whose signature the confirmable signature is. The statement of confirmable signature contains information binding the identity of the party issuing the confirmable signature, with the confirmable signature itself. Thus, a knowledge of the confirmable signature plus its statement contains all the information equivalent to the ordinary signature itself.

To better understand the operation of the methods disclosed herein, the following terminology is used. In the following example, a sending party is denoted A, a receiving party is denoted B, and a trusted third party is denoted C. We denote $Sig_X(m)$ $(X \in \{A, B, C\})$ as an ordinary signature on a message m signed using a secret key of X $S_X$, which can be universally verified using a public key of X $P_X$. We denote $CSig_Y(m)$ $(Y \in \{A, B\})$ as a confirmable signature on m signed using a secret key of Y $S_Y$. We denote $Sta\_of\_CSig_Y(m)$ as a validity statement of $CSig_Y(m)$, for instance, in the recommended confirmable signature scheme, as described in the second implementation herein, $Sta\_of\_CSig_Y(m)$ is the equality of two discrete logarithms. It can be proved by using either secret keys $S_Y$ or $S_C$.

A confirmable signature bound with its statement is universally verifiable and is as valid as an ordinary signature. Thus,

$$\{CSig_Y(m), Sta\_of\_CSig_Y(m)\} \equiv Sig_Y(m).$$

Without the statement, the binding between $Y$ and $CSig_Y(m)$ cannot be claimed.

In order to prove $Sta\_of\_Csig_Y(m)$ from one party (as signer named $Y$) to the other (as verifier) in a non-transferable way, use is made of an interactive zero knowledge proof between the two parties, named $Conf_Y$, which, on common inputs of $m, P_Y, P_C$, a string $Claim$ and on secret input of $S_Y$, outputs "true" or "false". That is,

$$Conf_Y(Sta\_of\_CSig_Y(m) \mid m, P_Y, P_C, Claim) = \text{true } or \text{ false}.$$

If the output is "true", it is proved that $Claim$ is $CSig_Y(m)$; if the output is "false", it is proved that $Claim$ is not $CSig_Y(m)$.

In a confirmable signature scheme, the confirmer can make either a non-transferable confirmation or a transferable confirmation of $Sta\_of\_CSig_Y(m)$. For the purpose of the proposed fair exchange protocol, only the transferable one is required. In the protocol presented herein an ordinary signature on $Sta\_of\_CSig_Y(m)$ signed using $S_C$ is used for the transferable confirmation of $CSig_Y(m)$. A confirmable signature suitable for the proposed fair exchange protocol has the following three properties:

- *Invisibility.* $CSig_Y(m)$ can be simulated by using a polynomial-time algorithm.
- *Unforgeability.* No polynomial-time algorithm can forge such a signature that can be confirmed to have a validity statement.
- *Undeniability.* Signer of $CSig_Y(m)$ cannot deny having issued this confirmable signature if $CSig_Y(m)$ is bound to $Sta\_of\_CSig_Y(m)$.

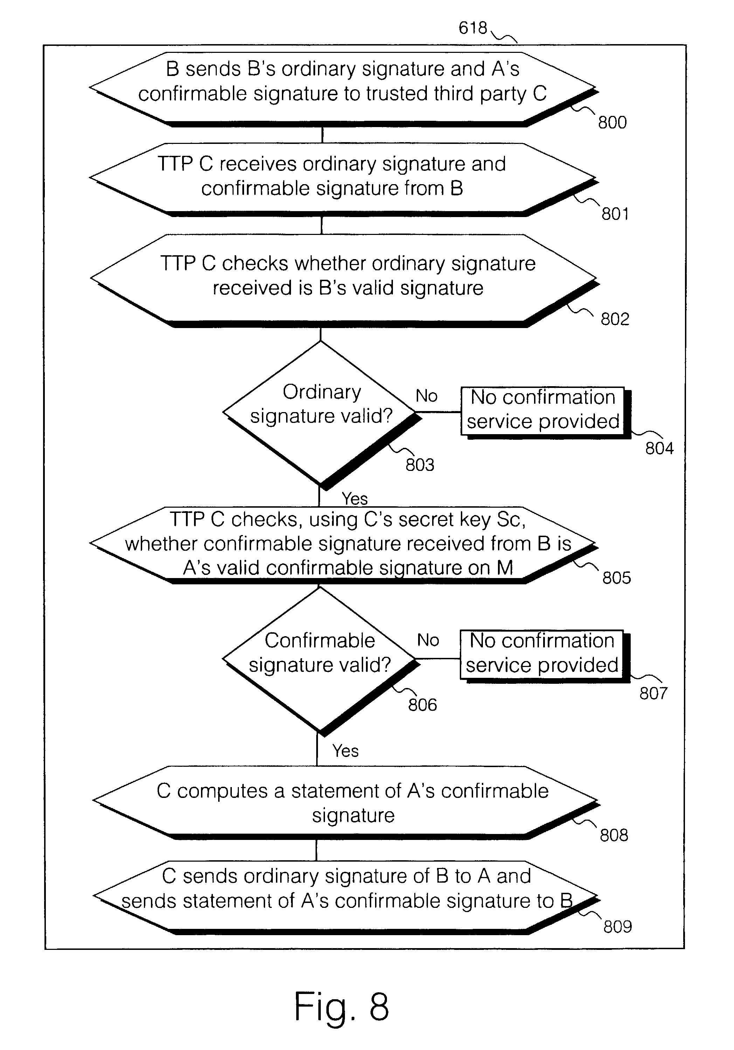

Referring to Figs. 5 to 8 herein, there will now be described an operation of a fair exchange of digital signatures between the first and second parties A, B respectively operating a first fair exchange protocol method. Stages in the protocol are referenced by number to their schematic representation in Figs. 5 to 8 herein.

Suppose that A and B have agreed on a message (such as a contract) $M$. The protocol for fair exchange of signatures on $M$ between first party A and second party B proceeds as follows. Without loss of generality, we assume that A is the protocol initiator.

1. A computes its confirmable signature (600) on $M$, $CSig_A(M)$, and sends it to B (500, 601).

2. A and B run (602) an interactive zero knowledge protocol $Conf_A$, involving three communications between A and B, (500, 501, 502), for example as described in the second implementation herein proving $Sta\_of\_CSig_A(M)$, to verify whether $CSig_A(M)$ is in fact a confirmable signature. A confirmable signature is one which can be confirmed by a trusted third party. The purpose of the zero knowledge proof is to prove to receiving party B that the signature data received is in fact a confirmable signature. The confirmable signature can not be verified to any other parties other than the trusted third party, receiving party or sending party that it represents a signature. It is confirmable to the receiving party B. The first transmission of the zero knowledge protocol is sent from A to B with the confirmable signature in step 500 in the same data flow as at substantially the same time, or immediately sequentially with each other. The confirmable signature and the first message part of the zero knowledge proof protocol are sent from A to B in the same transmission for reasons of efficiency to reduce the number of required data transmissions between parties A and B. If

$$Conf_A(Sta\_of\_CSig_A(M) \mid M, P_A, P_C, CSig_A(M)) = \text{false},$$

the proof is rejected in step 603 and the protocol stops in step 604.

If

$$Conf_A(Sta\_of\_CSig_A(M) \mid M, P_A, P_C, CSig_A(M)) = \text{true},$$

B computes its ordinary signature $Sig_B(M)$ in step 605 and sends it to A in step 606, 503.

3. After receiving B's ordinary signature $Sig_B(M)$ in step 607, A verifies whether the ordinary signature received from B is a valid signature in step 608. If not, A halts in step 610; if it is valid, A accepts the signature, and then computes its own ordinary signature $Sig_A(M)$ in step 611 and sends it to B in step 612, 504.

4. Upon the receipt of A's ordinary signature $Sig_A(M)$ in step 613, B verifies whether it is a valid one in step 614. If it is, B accepts the signature in step 616, and the protocol completes in step 617.

If the above steps are successfully completed, then a fair exchange of digital signatures occurs between first and second parties A, B without the intervention of the trusted third party C. However, where B receives the confirmable signature of A and the zero knowledge proof step 501, 602 fails to verify the confirmable signature of A, a referral to the trusted third party may be invoked as follows:

5. If B receives an invalid signature or nothing during a designed time period, B refers to the trusted third party C in step 618 by sending both the ordinary signature of B, $Sig_B(M)$ and the confirmable signature of A, $CSig_A(M)$ to C in step 700. On receiving the ordinary signature of B and the confirmable signature of A in step 801, C first checks whether $Sig_B(M)$ is B's valid signature on $M$ in step 802, and secondly checks in step 805, by using C's secret key $S_C$, whether $CSig_A(M)$ is A's valid confirmable signature on $M$. If either of these two checks does not pass, C does not provide a confirmation service. If both of the checks pass, in steps 808, 701 C computes A's statement of signature $Sta\_of\_CSig_A(M)$, and sends it to B, and in the meantime, C simultaneously forwards B's ordinary signature $Sig_B(M)$ to A in steps 809, 702.

We now consider the behaviour of A and B. If both of them follow the protocol properly A and B will obtain each other's signatures without any involvement of C.

If B performs improperly, B may send A either an incorrect ordinary signature $Sig_B(M)$ or nothing in step 502. In both of these cases, A does not send A's ordinary signature $Sig_A(M)$ to B in step 504 and B has to ask C for confirmation of A's confirmable signature $CSig_A(M)$ if B wants A's ordinary signature. C makes such a confirmation for B only if B gives its valid ordinary signature $Sig_B(M)$, which will be forwarded to A.

If A does not follow the protocol properly, either of the following two situations may happen: (i) A sends B a non-confirmable signature in step 500. In this case, A cannot demonstrate to B in step 602 that
$Conf_A(Sta\_of\_CSig_A(M) \mid M, P_A, P_C, CSig_A(M)) = true$

(ii) A sends an invalid ordinary signature $Sig_A(M)$ or nothing to B in steps 504, 612. In this case, B can obtain the statement of A's confirmable signature $CSig_A(M)$ from C by referral in step 618.

As mentioned earlier, the fairness of exchanging signatures between two parties means that either each party gets the other's signature, or neither party does. In terms of the definition of fairness applied herein, neither A nor B can gain any significant benefit by performing improperly.

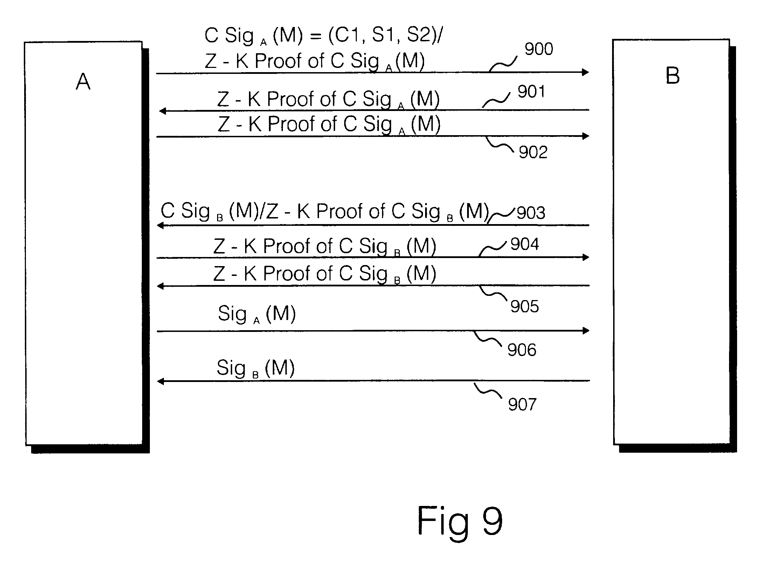

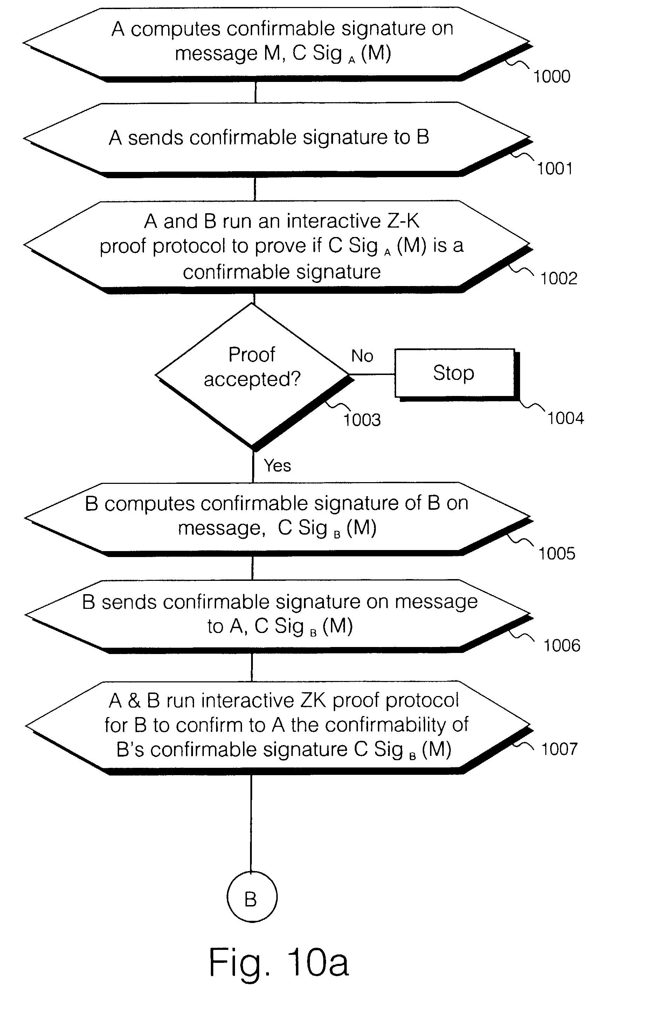

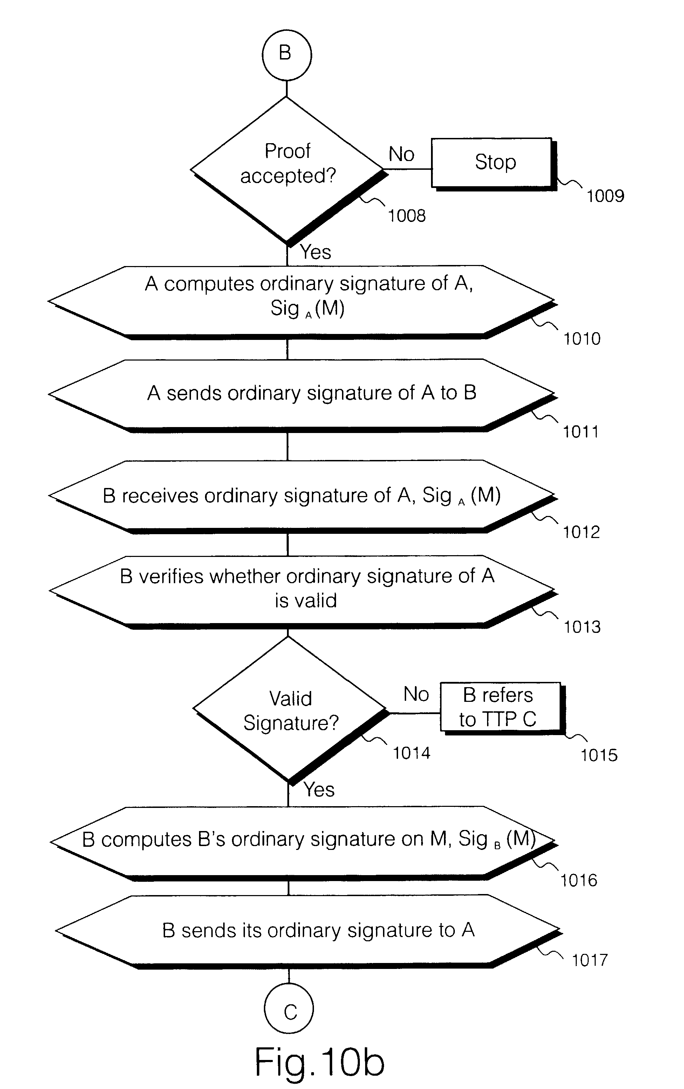

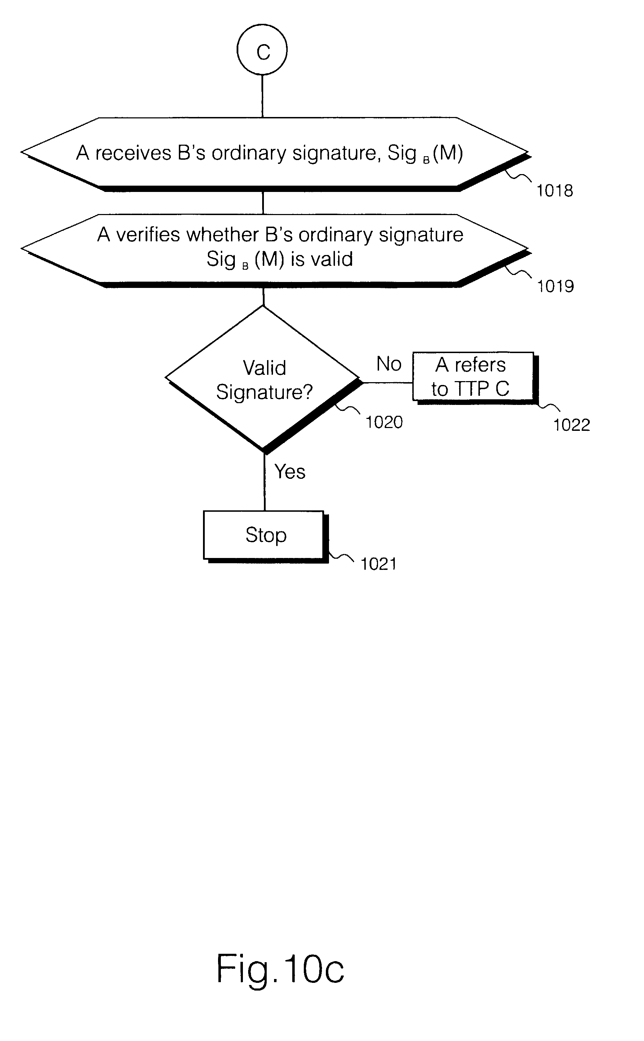

However, in the first protocol method described herein, after accepting A's confirmable signature $CSig_A(M)$, B has the advantage of choosing to stop or continue with the first protocol. To improve the "fairness" of the exchange, and to balance the flow of information held by sender A and receiver B at any time during the exchange, the protocol can be slightly changed to provide a second specific protocol method, which includes an additional safeguard to party A, as illustrated schematically in Figs. 9 and 10 herein. Referring to Figs. 9 and 10 herein, in the second specific protocol method, following A having proved its confirmable signature to B, B proves its confirmable signature to A. Then A releases her ordinary signature and B releases its ordinary signature. Both A and B can ask C for a confirmation service.

Referring again to Figs. 9 and 10 herein, normal operation of the second protocol is as follows. Firstly, in step 1000, A computes her confirmable signature on message M $CSig_A(M)$, and sends it to second party B 900, 1001. A and B communicate with each other to operate a zero knowledge proof protocol 900, 901, 902 for A to prove the confirmable signature of A, $CSig_A(M)$ to B in step 1002. If B rejects the proof as invalid in step 1003, B ceases operating the second protocol in step 1004. At this stage, B has received a confirmable signature from A, which turned out to be false when the zero knowledge interactive proof was applied, and therefore ceases to interact with A. If the proof of A's confirmable signature is accepted by B in step 1003, in step 1005, B proceeds to compute its own confirmable signature on message M, $Csig_B(M)$, and proceeds to send this to A in step 903, 1006. A and B operate a second zero knowledge proof protocol 903, 904, 905 in which B confirms to A the validity of B's confirmable signature $Csig_B(M)$ in step 1007. If A rejects the proof of validity of B's confirmable signature in step 1008, A ceases to operate the second protocol in step 1009. In this case, at that stage A has sent its confirmable signature on M to party B, and has confirmed to B, by the zero knowledge proof protocol the validity of A's confirmable signature on M, but has received from B an invalid confirmable signature from B on message M. Therefore A withdraws from the interaction with B in step 1009. However, if in step 1008, B successfully confirms the validity of B's confirmable signature to A, then in step 1010, A computes its ordinary signature, $Sig_A(M)$ and proceeds 906 to send this to B in step 1011. B receives the ordinary signature of A in step 1012, and in step 1013, B verifies whether A's ordinary signature is valid. If in step 1014, B rejects the validity of A's ordinary signature, in step 1015, B can refer to trusted third party C. However, if in step 1014, B successfully confirms A's ordinary signature as being valid, B then proceeds to compute B's ordinary signature on M, Sig$_B$(M) in step 1016, and B sends 907 its ordinary signature to A in step 1017. In step 1018, A receives B's ordinary signature Sig$_B$(M) and in step 1019 A proceeds to verify whether B's ordinary signature Sig$_B$(M) is valid. In step 1020, if A accepts B's ordinary signature as being valid, in step 1021 A ceases the protocol, valid ordinary signatures between parties having being successfully exchanged. However, if in step 1020, A rejects the validity of B's ordinary signature Sig$_B$(M), in step 1022, A can refer to trusted third party C.

As in the first protocol, in the second protocol method, C always makes confirmation of a signature for one party and forwards an ordinary signature to another party. However, in the second protocol, before C provides the confirmation, A is able to ask C for invoking an *abort* procedure (i.e. by an *abort* sub-protocol as disclosed in "Optimistic fair exchange of digital signatures", herein before referred). C maintains an extra record concerning whether a confirmation request results in an "abort" or a "confirmed".

A normal procedure of the first protocol method, where there is non-intervention of C, includes only five communication rounds: three rounds for non-transferable confirmation of $CSig_A(M)$ (Items 500, 501, 502 by using the recommended best mode method described herein after); and two rounds for exchange of $Sig_B(M)$ and $Sig_A(M)$ (Item 503, 504).

Note that both parties' identifiers must be indicated in $CSig_A(M)$, which could be a part of the message *M*. Otherwise, C can know only that A is one of the exchange parties, and he cannot know who is another. In this case, an intruder (who may be B's colluder), given $CSig_A(M)$, can obtain the confirmation of $CSig_A(M)$ from C by providing his own signature on *M*. After the protocol is running, A will get an unexpected intruder's signature in place of B's one, which is not what A wants.

The first protocol method can be modified to meet the following different requirements of message styles; using the following modifications:

Firstly, assume that A and B want to keep *M* confidential to C. They can use a one-way hash function, *h()*, and replace *M* with *h(M)* in the first protocol.

Secondly, assume that A and B want to sign two messages $M_A$ and $M_B$, where both A's signature on $M_A$ and B's signature on $M_B$ can be universally verified. In this case C should be able to check if he is making a confirmation service for a real agreement between A and B. For this purpose, each file signed by one party must include an indicator of the file signed by the other. For example, as used in 'Efficient and practical fair exchange protocols with off-line TTP', F Bao, R Deng, W Mao, in Proceedings of 1988 IEEE Symposium on Security and Privacy, Oakland Califomia, IEEE Computer Press 1998 pages 77-85. A signs $M_A \| h(M_B)$ and B signs $M_B \| h(M_A)$, where $\|$ denotes concatenation. Otherwise (e.g., A and B directly sign $M_A$ and $M_B$ respectively for such $M_A$ and $M_B$ that have no explicit relationship explanation), B may send C $CSig_A(M_A)$ with $Sig_B(M'_B)$ for the confirmation service. Finally B get a real confirmed signature of A, who will get only a signature on a meaningless message $M'_B$. Furthermore, if it is required that both $M_A$ and $M_B$ are confidential to C, A and B can have extra secret and public key pairs for encryption and decryption. In this case, $M_A$ will be replaced by encrypted $M_A$ under B's encryption public key and $M_B$ will be replaced by encrypted $M_B$ under A's encryption public key as well.

Thirdly, if it is required with certain applications, the protocol can be modified by including multiple confirmers instead of a single one.

There will now be described a confirmable signature method according to a third specific implementation of the present invention, the confirmable signature method being suitable for best mode versions of the first and second protocol methods described herein before. It will be understood by those skilled in the art that the first and second protocol methods disclosed hereinbefore may use a number of different prior art confirmable signature methods. However, the confirmable signature method according to the third specific implementation of the present invention disclosed herein provides a best mode operation of the first and second protocol methods.

The concept and the first realization of confirmable signatures (also called designated confirmer signatures was proposed in the prior art in 'Designated confirmer signatures' D Chaum, in Advances in Cryptology - Eurocrypt '94, LNCS 950, Springer-Verlag 1994 pages 86-91, where there was presented a realization on the RSA signature algorithm. Following Chaum's idea, Okamoto proposed a more generic confirmable signature scheme in 'Designated confirmer signatures and public key encryption are equivalent' T Okamoto, in Advances in Cryptology - Crypto '94, LNCS 839, Springer-Verlag 1994 pages 61-74. However, that scheme was later attacked by Michels and Stadler in 'Generic constructions for secure and efficient confirmer signatures' M Michels, M Stadler, in Advances in Cryptology - Eurocrypt '98, LNCS 1403, Springer-Verlag, Berlin, 1998 pages 406-421 as the confirmer can forge signatures.

Michels and Stadler also proposed their own prior art confirmable signature scheme based on a primitive called *the confinner commitment scheme.* The scheme places a message in the position of a committal (i.e., commit to a message), and the confirmer is able to prove whether or not a given commitment contains a certain message. Using this scheme, two classes of ordinary digital signatures can be transformed into related confirmable signatures. The first class consists of the signatures that are based on proofs of some particular style of knowledge. Both the Schnorr signature and the Fiat-Shamir signature can be used in this way. The second class consists of the signatures that have the property of existential forgeability. For this kind of signature, an attacker can compute a universally verifiable message-signature pair without further constraint on the message. The RSA signature and the ElGamal signature are two good examples of this class.

However, the known prior art confirmable signature schemes have not yet been applied in the field of fair exchange protocols, as the prior art fair exchange protocols have focused on the use of verifiable encryption.

There is presented herein a new confirmable signature method according to a the third specific implementation of the present invention which is readily applicable to a fair exchange protocol method. In this method, a *confirmable signature* contains a *validity statement,* which is the equality of two discrete logarithms, and which can efficiently be proved either via running a zero knowledge proof protocol, or via verifying an ordinary digital signature signed by the confirmer. Any discrete logarithm based signature algorithm and any zero knowledge proof protocol for proving the equality or the inequality of two discrete logarithms can be used in this method. The security of the method can be established from that of the underlying signature schemes and that of the zero knowledge protocol used. In terms of efficiency the method is similar to the most efficient prior art confirmable signature scheme of 'Generic constructions for secure and efficient confirmer signatures' M Michels, M Stadler in Advances in Cryptology - Eurocrypt '98, LNCS 1403 Springer-Verlag, Berlin 1998 pages 406-421, which is based on the Schnorr signature scheme.

There will now be described an application of the confirmable signature method of the third specific implementation herein as applied to the first and second fair exchange protocol methods described herein before. The underlying theoretical basis for the confirmable signature is now described. It will be understood by the person skilled in the art that operation of the confirmable signature method is by way of process steps carried out by the physical and logical resources of the plurality of computer entities as described with reference to Fig. 4 herein, by operating a series of algorithm steps implemented practically as data processing means of the physical and logical resources operating in accordance with pre-programmed computer programs configured to operate in accordance with said algorithms. To avoid obscuring the explanation of the confirmable signature method, specific details of the programming are not described herein in detail, and such programming will be readily apparent to those skilled in the art.

Let $p$ be a prime, and q be another prime which divides $p\text{-}1$. Let G = $<g>$ be a subgroup of of $Z^*_p$ order $q$, in which computing discrete logarithms is infeasible. Let $h()$ denote a one-way hash function, and $a \in_R N$ denote to choose element $a$ from the set $N$ at random according to the uniform distribution.

A confirmable signature scheme involves three players: a Signer (say A), a Verifier (say B) and a designated Confirmer (say C). In the first or second proposed fair exchange protocol described hereinbefore, both the exchange parties, A and B, can be such a signer and verifier.

A, as a signer, has a secret and public key pair, denoted by $(S_A, P_A)$; and C has another secret and public key pair, denoted by $(S_C, P_C)$. These two key pairs can be generated as follows. A chooses $x \in_R Z^*_q$ as $S_A$, and computes $P_A = (g, y)$ where $y = g^x \bmod p$. C chooses $w \in_R Z^*_q$ as $S_C$, and computes $P_C = (g, z)$ where $z = g^w \bmod p$.

A confirmable signature scheme consists of the following two procedures: *signature issuance* and *signature confirmation.*

There is now described a signature issuance procedure between first and second parties A , B according to the present confirmable signature method. A signature issuance procedure runs between first and second parties A and B. It consists of (i) A generating $CSig_A(m)$; and (ii) A demonstrating to B that $CSig_A(m)$ is a confirmable signature on a message $m$.

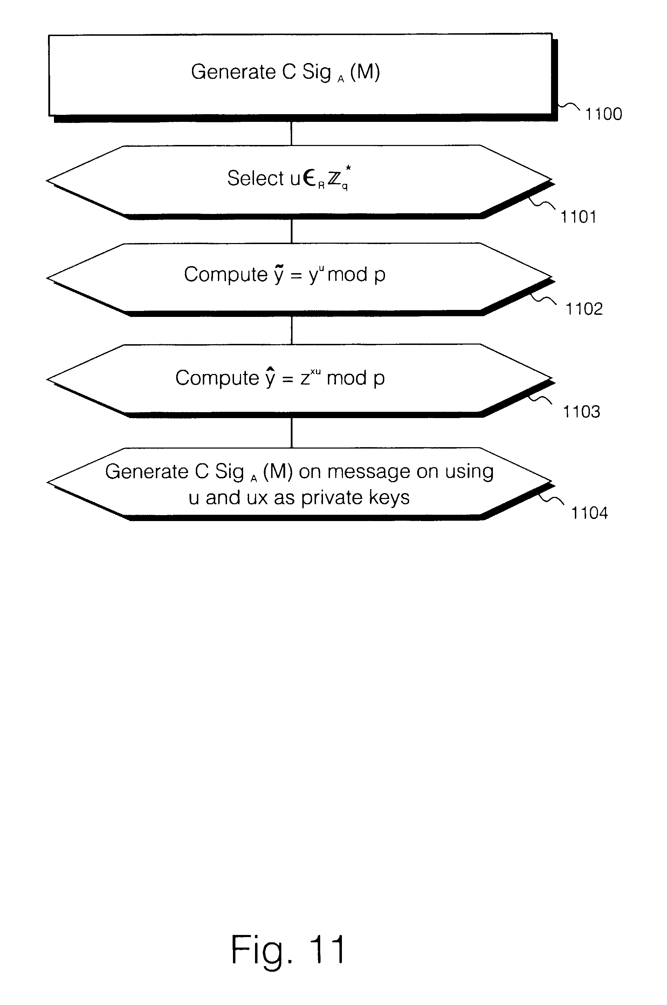

Referring to Fig. 11 herein, to generate $CSig_A(m)$, in step 1101 A chooses $u \in_R Z^*_q$, and in steps 1102 and 1103 respectively computes $\widetilde{y} = y^u \bmod p$ and $\hat{y} = Z^{xu} \bmod p$. Next in step 1104, A generates a signature on a message $m$ signed using $u$ and $ux$ as private keys. The basic idea of this signature is to make a transferable proof that: (i) someone knows how to express $\widetilde{y}$ as a power of $y$ and how to express $\hat{y}$ as a power of $z$; and (ii) this person has signed $m$ using the discrete logarithms of both $\widetilde{y}$ to the base $y$ and $\hat{y}$ to the base $z$ as private keys. Any existing secure signature algorithm, based on the discrete logarithm problem, can be used to make this signature. The following is an example using a Schnorr signature such as one disclosed in 'Efficient identification and signatures for smart-cards' C Schnorr, in Advances in Cryptology - Eurocrypt '89 LNCS 435, Springer-Verlag 1990 pages 239-252,

$$k_1, k_2 \in_R Z^*_q, \; r_1 = y^{k_1} \bmod p, \; r_2 = z^{k_2} \bmod p,$$

$$c = h(m, r_1, r_2), \; s_1 = k_1 - uc \bmod q, \; s_2 = k_2 - uxc \bmod q,$$

$$CSig_A(m) = (c, s_1, s_2).$$

The signature verification is to check if

$$c = h(m, \ y^{s_1}\tilde{y}^{c}, z^{s_2}\hat{y}^{c})$$

holds. This signature is universally verifiable. However, because anyone can construct $(c, s_1, s_2)$ by randomly choosing $\tilde{y}$ as a power of $y$ and $\hat{y}$ as a power of $z$, without further proof, no one can see who is the issuer of the signature.

Efficient operation of the confirmable signature method disclosed herein in the context of the first and second fair exchange protocols disclosed herein can be illustrated by the following propositions.

**Proposition 1**. *The above $CSig_A(m)$ is a confirmable signature with a validity statement $Sta\_of\_CSig_A(m)$,*

$$\log_{\tilde{y}} \hat{y} = \log_g z$$

(mod $q$).

*Proof*. On the assumption that a random oracle model holds, the proposition is proved if the following three assertions can be proved: (i) given that

$$\log_{\tilde{y}} \hat{y} = \log_g z \, ,$$

it can be proved that the issuer of $CSig_A(m)$ must be A; (ii) without the verification of

$$\log_{\tilde{y}} \hat{y} = \log_g z \, ,$$

it cannot be claimed that the issuer of $CSig_A(m)$ is A; (iii)

$$\log_{\tilde{y}} \hat{y} = \log_g z$$

can independently be verified by A and C.

By verifying the correctness of the digital signature, it can be proved that the issuer of $(c, s_1, s_2)$ must know both $\log_y \tilde{y}$, denoted by $u$, and $\log_z \hat{y}$, denoted by $v$. The value $\log_g \hat{y}$, denoted by $t$, must be the product of three values: $\log_g y = x$, $\log_y \tilde{y} = u$, and

$$\log_{\tilde{y}} \hat{y} \, .$$

If

$$\log_{\tilde{y}} \hat{y}$$

is $\log_g z = w$, *then* $t = xuw$ mod q and $v = xu$ mod $q$. The person who knows $v$ and $u$ must know $x$. Since $x$ is known only to A, the issuer of $CSig_A(m)$ must be A. The first assertion holds.

Without verifying

$$\log_{\tilde{y}} \hat{y} = \log_g z \, ,$$

no one can claim that $CSig_A(m)$ was signed by A, since anyone knowing y and z is able to generate the signature (see the proof of Proposition 3). The second assertion holds.

C is able to prove

$$\log_{\tilde{y}} \hat{y} = \log_g z \, ,$$

because $\log_g z$ is $S_C$. A can prove the knowledge of $u$ and $x$, and hence she can demonstrate this statement (see the next subsection). The third assertion holds.

According to the definition of a confirmable signature and the above three assertions, it has been proved that $Sta\_of\_CSig_A(m)$ is

$$\log_{\tilde{y}} \hat{y} = \log_g z$$

so that $CSig_A(m)$ is a confirmable signature. The proposition holds.

The following interactive protocol, denoted by $Conf_A$, is used for A to demonstrate $Sta\_of\_CSig_A(m)$ to B.

**Protocol** $Conf_A$

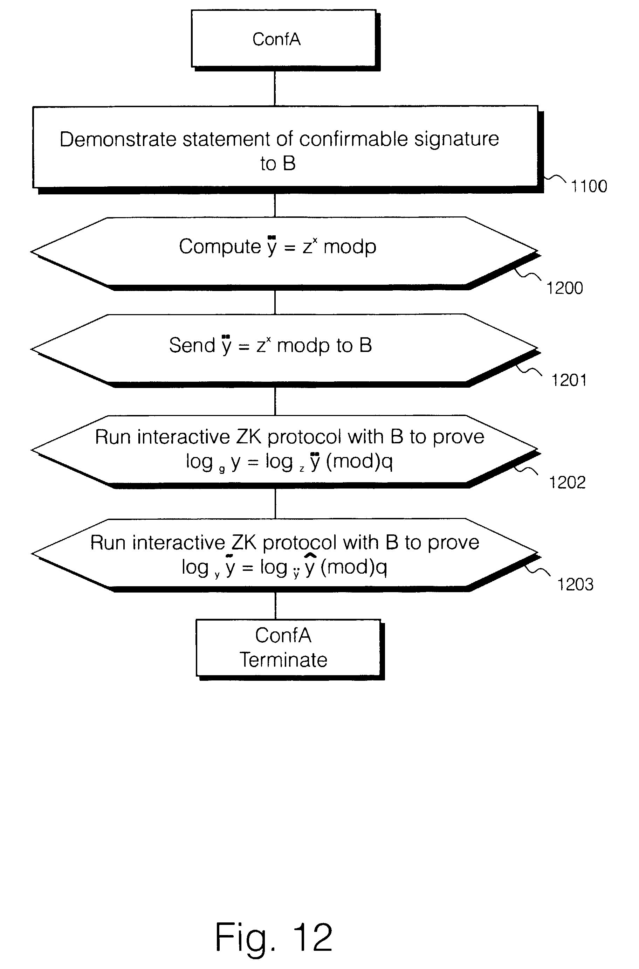

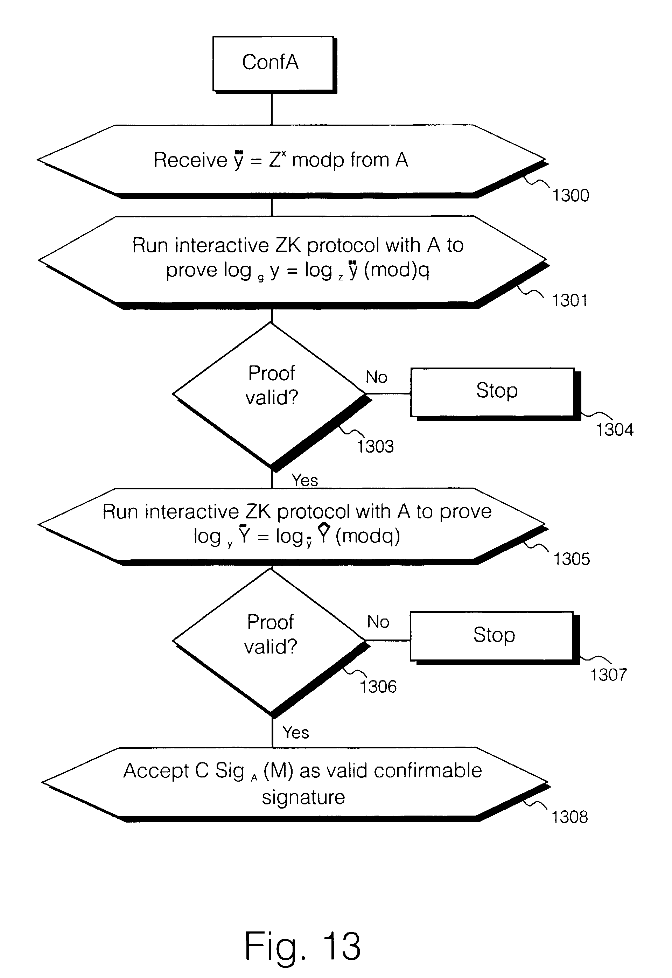

Suppose that before the protocol starts, both A and B have $\tilde{y}$, $\hat{y}$ and $CSig_A(m)$. Referring to Figs. 12 and 13 respectively which illustrates algorithmic steps performed by entities A and B respectively, the protocol operates as follows:

1. A computes $\ddot{y} = z^x \bmod p$ in step 1200 and sends it to B in step 1201, which is received by B step 1300.
2. A and B run an interactive zero knowledge protocol proving $\log_g y = \log_z \ddot{y}$ (mod $q$), (steps 1202, 1301).
3. A and B run an interactive zero knowledge protocol proving $\log_y \tilde{y} = \log_{\ddot{y}} \hat{y}$ (mod $q$), in steps 1203, 1305.
4. If both zero knowledge proofs are accepted in steps 1303, 1306, B is convinced that $CSig_A(m)$ is a confirmable signature and accepts it in step 1308. Otherwise, the proof is rejected and terminates the protocol in step 1304 or 1307.

Several efficient zero knowledge protocols for proving equality in discrete logarithms, e.g. as disclosed in 'Convertible undeniable signatures', J Boyar, D Chaum, I Damgård, T Pedersen in Advances in Cryptology - Crypto '90 LNCS 537 Springer-Verlag 1991 pages 189-205; and 'Zero knowledge undeniable signatures' D Chaum in Advances in Cryptology - Eurocrypt '90 LNCS 473 Springer-Verlag 1991 pages 458-464 can be used for the proof.

**Proposition 2.** *Upon acceptance of $Conf_A$, A proves*

$$\log_{\tilde{y}} \hat{y} = \log_g z$$

*(mod $q$) to B.*

*Proof.* Suppose $\tilde{y} = y^u \bmod p = g^{xu} \bmod p$ where $u \in Z^*_q$. From the first zero knowledge proof, B is convinced of $\ddot{y} = g^{xw} \bmod p$. From the second zero knowledge proof, B is convinced of $\hat{y} = \ddot{y}^u = g^{xwu}$ (mod $p$). So the proposition follows, i.e. $\hat{y} = \tilde{y}^w \bmod p$.

Signature confirmation operates as follows:

In order to let B know whether or not a given statement is $Sta\_of\_CSig_A(m)$. C needs to demonstrate to him either

$$\log_{\tilde{y}} \hat{y} = \log_g z \ (\text{mod } q), \ \text{or} \ \log_{\tilde{y}} \hat{y} \neq \log_g z \ (\text{mod } q).$$

A number of efficient protocols for a zero knowledge proof on the equality or inequality of two discrete logarithms, e.g. 'Efficient convertible undeniable signature schemes', M Michels, M Stadler in the Proceedings of the 4th Annual Workshop on Selected Areas in Cryptography 1997, can be used for the proof. C can either run an interactive zero knowledge protocol with B to make a non-transferable confirmation, or sign $Sta\_of\_CSig_A(m)$ for B to make a transferable confirmation. For the purpose of our fair exchange protocol, we need a transferable confirmation. A number of existing efficient interactive protocols for zero knowledge proof of the equality or inequality of two discrete logarithms can be turned into non-interactive protocols, which can be used. The following is one example based on the Schnorr signature in 'Efficient identification and signatures for smart-cards' C Schnorr, in Advances in Cryptology - Eurocrypt '89 LNCS 435, Springer-Verlag 1990 pages 239-252,. C signs (g, z, $\tilde{y}$, $\hat{y}$) using $S_C = w$ by two ordinary signatures.

The first signature makes a transferable proof in that there exist two values $r_1$ and $r_2$ satisfying $r_1 = g^k \bmod p$ and $r_2 = \tilde{y}^k \bmod p$ where $k \in Z^*_q$. The signature is (c, s') generated as follows.

$$k' \in_R Z^*_q, \ r'_1 = g^{k'} \bmod p, \ r'_2 = \tilde{y}^{k'} \bmod p,$$

$$c = h(r'_1, r'_2), \quad s' = k' - kc \bmod q.$$

The signature verification is to check if

$$c = h(g^{s'} r_1^c, \; \tilde{y}^{s'} r_2^c)$$

holds. If it does not hold, B can claim that C did not send a proper signature to him.

Based on acceptance of the first signature, the second signature provides a transferable proof on either

$$\log_{\tilde{y}} \hat{y} = \log_g z$$

or

$$\log_{\tilde{y}} \hat{y} \neq \log_g z .$$

The resulting signature is $(r_1, r_2, s)$, where

$$s = k + wh(r_1, r_2) \bmod q.$$

The signature verification is to check if

$$g^s = r_1 z^{h(r_1, r_2)} \pmod{p}, \quad \tilde{y}^s = r_2 \hat{y}^{h(r_1, r_2)} \pmod{p}$$

holds. If the first equality does not hold, B can claim that C did not send a proper signature to him. Otherwise, B accepts the conviction of the signature. In this case, if the second equality holds, B accepts

$$\log_{\tilde{y}} \hat{y} = \log_g z ,$$

and then further accepts that the related signature, $CSig_A(m)$, is a confirmable one. If the second equality does not hold, B accepts

$$\log_{\tilde{y}} \hat{y} \neq \log_g z ,$$

and further accepts that the related signature is not a confirmable one.

Note that before generating the above two signatures, C may check if $\hat{y} = \tilde{y}^w \bmod p$ holds firstly. If it does hold he can simply make a transferable proof on

$$\log_{\tilde{y}} \hat{y} = \log_g z$$

by using the second signature only. With this signature, anybody is able to verify the correctness of $Sta\_of\_CSig_A(m)$. Hence $CSig_A(m)$ is universally verifiable.

Security of the confirmable signature method disclosed herein is shown as follows.

The confirmable signature scheme, specified above, allows the parties of the scheme free to choose any discrete logarithms based signature algorithms and to choose any efficient protocols for zero knowledge proof on the equality or the inequality of two discrete logarithms. As long as the security property of those algorithms and protocols have been proved, i.e., (i) the verification of a digital signature is complete and sound; (ii) the error probability of an acceptance for a zero knowledge protocol is negligible; (iii) they guarantee not to reveal useful information about $x$ and $w$, the following three security properties hold under this scheme.

The properties of simulation, unforgeability, and undeniability of the confirmable signature method presented herein is illustrated by the following propositions and proofs.

**Proposition 3**. *A confirmable signature, $CSig_A(m)$, can be simulated.*

*Proof.* A simulator, who knows $g$, $y$, $z$, $q$, $p$ and $m$, is always able to generate a triple $(c', s'_1, s'_2)$ in the following way. They simply choose $u' \in_R Z^*_q$ and $v' \in_R Z^*_q$, computes $\tilde{y}' = y^{u'} \bmod p$ and $\hat{y} = z^{v'} \bmod p$, and then signs $m$ using $u'$ and $v'$ as private keys, by the same approach described in Section 3.2, to obtain $(c', s'_1, s'_2)$. For two fixed public keys $y$ and $z$, and any message $m$, let $A$ be any polynomial-time algorithm which, on input of a signature pair $(m, )$ outputs whether or not $(m, )$ is valid with respect to $y$ and $z$. The value

$$Pr\{A(m, (c', s'_1, s'_2)) = \text{valid}\} - Pr\{A(m, (c, s_1, s_2)) = \text{valid}\}$$

is negligible.

Note that there is no binding between $z^x$ and $(c, s_1, s_2)$, hence $z^x$ does not reveal any useful information for distinguishing a real $CSig_A(m)$ and a simulated one. Furthermore, the set $(g, g^x, z^x, \tilde{y}, \hat{y})$ is indistinguishable from the set $(g, g^x, z^x, \tilde{y}', \hat{y})$ otherwise the Decision Diffie-Hellman assumption is not valid in the random oracle model. So the proposition holds.

**Proposition 4**. *A confirmable signature, $CSig_A(m)$, is unforgeable, i.e., under the assumption on that it is computationally infeasible to compute discrete logarithm in G, there is no polynomial-time algorithm which, on input of $y$, $z$, $w$, and any value $m' \in \{0, 1\}^*$, outputs $CSig_A(m')$, with respect to $\tilde{y}'$ and $\hat{y}$ satisfying*

$$\log_{\tilde{y}'} \hat{y}' = \log_g z$$

*(mod q).*

*Proof.* It has been proved in Proposition 1 that, if

$$\log_{\tilde{y}'} \hat{y}' = \log_g z \,,$$

the value $\log_z \hat{y}'$ must be equal to $\log_g y * \log_y \tilde{y}'$. If there is a polynomial-time algorithm $A$ which, on input of $y$, $z$, $w$ and $m'$, outputs $CSig_A(m')$ with respect to $\tilde{y}'$ and $\hat{y}$ satisfying

$$\log_{\tilde{y}'} \hat{y}' = \log_g z \,,$$

$A$ must be able to obtain $\log_g y$. This contradicts the assumption. Hence the proposition holds.

This proposition proves that no one, including the confirmer C, is able to forge such a confirmable signature, $CSig_A(m)$.

**Proposition 5**. *A confirmable signature, $CSig_A(m)$, is undeniable.*

*Proof.* It is impossible for A to find any $\tilde{y}$, $\ddot{y}$ and $\hat{y} \in Z^*_p$ satisfying $\log_g y = \log_z \ddot{y}$, $\log_y \tilde{y} = \log_{\ddot{y}} \hat{y}$ and

$$\log_g z \neq \log_{\tilde{y}} \hat{y} \,.$$

As has been proved in Proposition 1, given that

$$\log_g z = \log_{\tilde{y}} \hat{y} \,,$$

only the person knowing $\log_g y$ is able to make $CSig_A(m)$, so that A cannot deny having issued this confirmable signature. Therefore the proposition holds.

**Claims**

1. A method for facilitating fair exchange of digital signatures in an electronic communications system between a first party and a second party including use of one or more confirmable signatures, such that either each party receives a valid digital signature of the other party, or neither party receives a valid digital signature, said method comprising a plurality of message transfers between the two parties, and wherein a trusted third party may act as a confirmer, which can independently verify the validity of a confirmable signature originating from either the first party or the second party.

2. A method according to claim 1, including the steps of:

(a) said first and second parties agreeing to exchange their digital signatures, at least one of the first and second parties generating and transferring to the other party a confirmable signature, and the originating party of the confirmable signature and the receiving party of the confirmable signature running a non-transferable protocol to convince the receiving party of the confirmability of the confirmable signature; and

(b) if the exchange of the two digital signatures is not completed, the receiving party requesting said trusted third party to take action as a designated confirmer, which can independently verify and make a confirmation of the validity of the confirmable signature of the originating party, to complete the exchange.

3. A method according to claim 1 or claim 2, including the steps of:

(a) the first party generating and transferring to the second party a confirmable signature;

(b) the first party and the second party running a non-transferable protocol to convince the second party of the confirmability of the confirmable signature;

(c) once convinced of the confirmability of the confirmable signature, the second party returning to the first party a digital signature of the second party; and

(d) the first party verifying the digital signature of the second party and returning to the second party a digital signature of the first party,
    wherein, if step (d) above is not completed, the method includes the steps of:

(e) the second party transferring to a trusted third party a message including its own digital signature and a confirmable signature of the first party; and

(f) the trusted third party;

    verifying the digital signature of the second party, and the confirmable signature of the first party;
    returning to the second party a message including a digital signature of the third party indicative of the validity of the confirmable signature of the first party; and

(g) transmitting a message to the first party including the digital signature of the second party.

4. A method according to claim 1 or claim 2, which allows the first party to invoke a trusted third party not to provide the confirmation service before both the first party and second party receive valid digital signatures of each other, and including the steps of:

(a) the first party generating and transferring to the second party a confirmable signature, the first party and second party running a non-transferable protocol to convince the second party of the confirmability of the confirmable signature of the first party;

(b) once convinced of the confirmability of the confirmable signature of the first party, the second party generating and transferring to the first party a confirmable signature, the second party and first party running a non-transferable protocol to convince the first party of the confirmability of the confirmable signature of the second party;

(c) once convinced of the confirmability of the confirmable signature of the second party, the first party returning to the second party a digital signature of the first party;

(d) the second party verifying the digital signature of the first party and returning to the first party a digital

22

signature of the second party; and

wherein, if any steps (a), (b), (c) and (d) above are not completed, the method includes the steps of:

(e) the first party asking a trusted third party to invoke an abort if the first party wishes to abort, and the trusted third party maintaining an abort record;

(f) either of the first party or second party transferring to the trusted third party a message including its own digital signature and the confirmable signature of the other parties; and

(g) the trusted third party:

(i) checking whether or not there is an abort record; and

(ii) if there is an abort record, the trusted third party not providing a confirmation service; or

(iii) if there is no abort record, the trusted third party:

verifying the digital signature of the transferring party and the confirmable signature of the other party;
returning to the transferring party a message including a digital signature of the trusted third party indicative of the validity of the confirmable signature of the other party; and
transmitting a message to the other party including a digital signature of the transmitting party.

5. A confirmable signature suitable for use with a method according to any one of the preceding claims, wherein the confirmable signature includes a validity statement and includes the properties of:

(a) the validity statement is the equality of two discrete logarithms that can be independently verified for confirmability by the originating party of the confirmable signature and the trusted third party;

(b) when bound with the validity statement, the confirmable signature is universally verifiable;

(c) without the validity statement, no binding between the originating party of the confirmable signature and the confirmable signature can be claimed; and

(d) a private key/public key pair of each party, including the first party, the second party and the trusted third party is selected from a common large prime order group.

6. A method of generating a confirmable signature as claimed in claim 5.

7. The method according to any one of claims 1 to 4 used in either one of the following scenarios;

(a) the first party and second party sign and exchange a same agreed message; or

(b) the first party and second party sign and exchange two different agreed messages, wherein each message includes an indicator of the other message.

8. A method according to claim 7, wherein the messages can be plaintext or ciphertext.

9. A method of exchanging digital signature data between first and second parties, said method comprising the steps of:

sending a first digital signature data between said first party and said second party said first digital signature data being a data which is universally verifiable as being a signature data of a signing party without identifying said signing party;

establishing that said first digital signature data is in fact a confirmable digital signature data of said signing party by implementing a zero knowledge proof of said first digital signature data;

sending a second digital signature data between said first and second parties, said second digital signature data being an ordinary signature of one of said parties; and

sending a third digital signature data between said first and second parties, said third digital signature data being an ordinary signature of the other one of said first and second parties.

10. The method as claimed in claim 9, wherein said first party sends and receives said data via a first computing entity, and said second party sends and receives data via a second computing entity.

11. A method of exchanging digital signature data between first and second parties, said method comprising the steps of:

sending a first confirmable digital signature data of said first party from said first party to said second party;

sending said first confirmable digital signature data to a trusted third party;

sending a second ordinary digital signature data, of said second party to said trusted third party;

said trusted third party sending a first statement data relating to said first confirmable signature data to said second party, said statement data comprising data capable of providing a first universally verifiable digital signature data of said first party when combined with said first confirmable digital signature data; and

sending said second ordinary digital signature data of said second party to said first party.

12. The method as claimed in claim 11, further comprising the steps of:

said second party receiving said first statement data relating to said first confirmable signature data of said first party; and

said second party obtaining from said first confirmable signature data, and said statement of said first confirmable signature data, said first universally verifiable digital signature data of said first party.

13. The method as claimed in claim 11, wherein said step of sending said statement data of said first confirmable signature data and said step of sending said ordinary signature data of said second party occur substantially simultaneously.

14. The method as claimed in claim 11, wherein said first party sends and receives data at a first computing entity, said second party sends and receives data at a second computing entity, and said third party sends and receives data at a third computing entity.

15. A method of effecting a fair exchange of digital signature data between first and second computing entities, said method comprising the steps of:

generating a confirmable digital signature data of said first entity;

sending said confirmable digital signature data to said second entity;

said first and second entities verifying said confirmable digital signature data as being true by means of a zero knowledge proof protocol;

generating an ordinary digital signature data of said second entity;

sending said ordinary digital signature data of said second entity to said first entity;

generating an ordinary digital signature data of said first entity; and

sending said ordinary digital signature data of said first entity to said second entity.

**16.** A system of co-operating computing entities, each said computing entity comprising a data processing means, a memory means, and a communications means, said system configured such that said plurality of computing entities co-operate with each other such that:

a first entity generates a digital confirmable signature data relating to said first entity;

said first entity sends said digital confirmable signature data to a second entity;

said first and second entities co-operate with each other to verify said digital confirmable signature data as being true by means of a zero knowledge proof protocol;

said second entity generates an ordinary digital signature data relating to said second entity;

said second entity sends said ordinary digital signature data to said first entity;

said first entity generates an ordinary digital signature data relating to said first entity; and

said first entity sends said ordinary digital signature data of said first entity to said second entity.

**17.** A computing entity comprising:

a data processing means;

a memory means; and

a communications means,

said data processing means configured so as to be capable of processing data according to a set of pre-configured instructions stored in said memory means; and

said communications means configured so as to communicate data according to said set of pre-configured instructions such that said computing entity is capable of:

generating a confirmable digital signature data of a first party;

sending said confirmable digital signature data of said first party to a second party;

communicating with said second party to verify to said second party by means of a zero knowledge proof protocol that said confirmable signature data of said first party is a confirmable signature;

receiving a confirmable digital signature data sent from said second party;

communicating with said second party to establish a validity of said confirmable digital signature data of said second party by means of a zero knowledge proof protocol;

generating an ordinary digital signature data relating to said first party;

sending said ordinary digital signature data of said first party to said second party; and

receiving an ordinary digital signature data of said second party.

**18.** The computing entity as claimed in claim 17, further configured so as to be capable of checking that said ordinary digital signature data of said second party is a valid signature data.

**19.** The computing entity as claimed in claim 17, further configured such that:

if said computing entity is unable to establish that said confirmable digital signature data of said second party is a confirmable digital signature said entity generates an ordinary signature data of said first party; and

sends said ordinary digital signature data of said first party and said confirmable digital signature data of said second party to a third party.

20. The computer entity as claimed in claim 17, further configured for:

checking said ordinary digital signature data of said second party to see if said digital signature data is valid; and

if said ordinary digital signature data of said sending second party is determined to be invalid; sending said confirmable digital signature data of said second party and said ordinary digital signature of said first party to a third party.

21. The computer entity as claimed in claim 17, further configured for:

receiving a statement of confirmable digital signature data from a third party;

processing said confirmable digital signature data of said second party, and said statement of confirmable digital signature data received from said third party, to determine a universally verifiable digital signature data of said second party.

22. An algorithm for controlling a computer entity said algorithm comprising a set of instructions to a data processor device for:

generating a confirmable digital signature data of a first party;

sending said confirmable digital signature data of said first party to a second party;

communicating with said second party to verify to said receiving party that said confirmable signature data is a confirmable signature, by an interactive zero knowledge proof protocol;

receiving a confirmable digital signature data from said second party;

communicating with said second party to establish that said confirmable digital signature data of said second party is a confirmable signature;

generating an ordinary signature data of said first party;

sending said ordinary digital signature to said second party; and

receiving an ordinary digital signature of said second party.

23. The algorithm as claimed in claim 22, further comprising instructions to check that a said ordinary digital signature data is a valid signature data.

24. The algorithm as claimed in claim 22, further comprising instructions to:

if said confirmable digital signature data of said second party is not verified as being a confirmable signature, generate an ordinary signature data of said first party; and

send said ordinary signature data of said first party and said confirmable digital signature data of said second party to a third party.

25. The algorithm as claimed in claim 22, further comprising instructions to:

check said ordinary digital signature data of said second party to see if said digital signature data of said second party is valid; and

if said ordinary digital signature data of said second party is determined to be invalid, sending said confirmable digital signature data of said second party, and said ordinary digital signature of said first party to a third party.

**26.** The algorithm as claimed in claim 22, further comprising instructions to:

receive a statement of confirmable digital signature data from a third party ;

process said confirmable digital signature data of said second party, and said statement of confirmable digital signature data received from said third party, to determine a universally verifiable digital signature data of said second party.

**27.** A computer entity comprising:

a data processing means;

a memory means; and

a communications means,

said data processing means configured so as to be capable of processing data according to a set of pre-configured instructions stored in said memory means, and said communications means configured so as to communicate data according to said set of pre-configured instructions such that said computing entity is capable of operating as follows:

receiving a confirmable digital signature data of a first party;

receiving an ordinary digital signature data of a second party;

checking a validity of said confirmable digital signature data;

checking a validity of said ordinary digital signature data;

generating a statement of said confirmable digital signature data;

sending said statement of confirmable digital signature data to said second party; and

sending said ordinary signature of said second party, to said first party.

**28.** The computing entity as claimed in claim 27, configured to:

send said statement of confirmable digital signature data to said second party, and send said ordinary signature data of said second party to said first party substantially simultaneously.

**29.** The computing entity as claimed in claim 27, further configured to operate to:

check a validity of said ordinary digital signature data of said second party, received from said second party.

**30.** An algorithm for controlling a computer entity said algorithm comprising a set of instructions for:

receiving a confirmation digital signature data relating to a first party;

receiving an ordinary digital signature data relating to a second party;

checking a validity of said confirmable digital signature data;

checking a validity of said ordinary digital signature data;

generating a statement of said confirmable digital signature data;

sending said statement of confirmable digital signature data to said second party; and

sending said ordinary signature of said receiving second party, to said first party.

31. The algorithm as claimed in claim 30, comprising instructions such that:

sending said statement of confirmable digital signature data to said second party, and said step of sending said ordinary signature data of said second party to said sending first party occur substantially simultaneously.

32. The algorithm as claimed in claim 30, comprising instructions to check a validity of said ordinary digital signature data of said second party, received from said second party.

33. A system of digital data signals for communications between a plurality of computer entities, said system of digital data signals comprising:

a confirmable digital signature data, said confirmable digital signature data comprising data which is capable of being verified as being data representing a signature of a party without identifying said signing party; and

a validity statement of confirmable digital signature data, said validity statement comprising data comprising information which confirms said confirmable digital signature data has been signed by said party.

34. The system as claimed in claim 33, wherein said validity statement of said confirmable digital signature is signed by using a secret key data of a trusted third party.

35. A signature issuance procedure between first and second parties A and B, consisting (i) first party A generating a confirmable signature data of A, $Csig_A(m)$; and (ii) first party A demonstrating to second party B that $Csig_A(M)$ is a confirmable signature on a message m, wherein;

$p$ is a prime number,

$q$ is another prime which divides $p-1$;

$G = <g>$ is a subgroup of $Z^*_p$ of order $q$, in which computing discrete logarithms is infeasible;

$h()$ denotes a one-way hash function; and

$a \in_R N$ denotes a choice of an element a from a set $N$ at random according to a uniform distribution;

first party A, as a signer, has a secret and public key pair, $(S_A, P_A)$;

a third party C has another secret and public key pair, $(S_C, P_C)$, wherein said two key pairs are generated as follows:

first party A chooses $x \in_R Z^*_q$ as its secret key $S_A$, and computes its public key $P_A = (g, y)$ where $y = g^x \bmod p$;

third party C chooses $w \in_R Z^*_q$ as the secret key $S_C$, and computes its public key $P_C = (g, z)$ where $z = g^w \bmod p$;

to generate said confirmable signature of first party A, $CSig_A(m)$, first party A chooses $u \in_R Z^*_q$, and computes $\tilde{y} = y^u \bmod p$ and $\hat{y} = z^{xu} \bmod p$;

first party A generates a signature on a message $m$ signed using $u$ and $ux$ as private keys;

a Schnorr signature is used such that

$$k_1, k_2 \in_R Z^*_q, r_1 = y^{k_1} \bmod p, r_2 = z^{k_2} \bmod p,$$

$$c = h(m, r_1, r_2), s_1 = k_1 - uc \bmod q, s_2 = k_2 - uxc \bmod q,$$

$$CSig_A(m) = (c, s_1, s_2);$$

and

said signature is verified by checking whether

$$c = h(m,\ y^{s_1}\tilde{y}^c, z^{s_2}\hat{y}^c)$$

is true,

said confirmable signature has a validity statement

$$\log_{\tilde{y}}\hat{y} = \log_g z \pmod{q}.$$

Fig 1
(Prior Art)

A
B

202
200
201
203

(I)

(II)

(III)

# Fig. 2
# (Prior Art)

Fig 3

EP 0 955 745 A2

| Application | ~ 412 | | Application | ~ 413 | | Application | ~ 414 |

| OS | ~ 409 | | OS | ~ 410 | | OS | ~ 411 |

| User Interface | ~ 415 | | User Interface | ~ 416 | | User Interface | ~ 417 |

| Memory | ~ 403 | | Memory | ~ 404 | | Memory | ~ 405 |

| Processor | ~ 400 | | Processor | ~ 401 | | Processor | ~ 402 |

| Comms Ports | ~ 406 | | Comms Ports | ~ 407 | | Comms Ports | ~ 408 |

~ 300      ~ 302      ~ 301

A                    C                    B

Fig 4

EP 0 955 745 A2

EP 0 955 745 A2

A

$C\ Sig_A(M) = (C1,\ S1,\ S2)/Z\text{-}K\ Proof$ ⟿ 500

Z - K Proof ⟿ 501

Z - K Proof ⟿ 502

$Sig_B(M)$ ⟿ 503

$Sig_A(M)$ ⟿ 504

B

$S_A\ P_A$

$S_B\ P_B$

# Fig 5

A computes confirmable signature on
message M, C Sig$_A$(M)

600

A sends confirmable signature to B

601

A and B run an interactive zero knowledge
proof protocol to prove C Sig A (M) is a
confirmable signature

602

Proof
accepted?

No

Stop

603

604

Yes

B computes ordinary signature of B, Sig$_B$ (M)

605

B sends ordinary signature of B to A

606

A receives ordinary signature of B, Sig$_B$ (M)

607

A verifies whether Sig$_B$ (M) is a valid signature

608

A

Fig. 6a

A

Valid
Signature? —No— Stop
609 610

Yes

A computes ordinary signature of A,
Sig $_A$ (M)
611

A sends ordinary signature of A to B
612

B receives ordinary signature of A, Sig $_A$ (M)
613

B verifies whether ordinary signature of A
is a valid signature
614

Valid
Signature? —No— B refers
to TTP
615 618

Yes

B accepts signature
616

Stop
617

Fig.6b

Fig 7

EP 0 955 745 A2

618

B sends B's ordinary signature and A's
confirmable signature to trusted third party C

800

TTP C receives ordinary signature and
confirmable signature from B

801

TTP C checks whether ordinary signature
received is B's valid signature

802

Ordinary
signature valid? —No→ No confirmation
service provided

803

804

Yes

TTP C checks, using C's secret key Sc,
whether confirmable signature received from B is
A's valid confirmable signature on M

805

Confirmable
signature valid? —No→ No confirmation
service provided

806

807

Yes

C computes a statement of A's confirmable
signature

808

C sends ordinary signature of B to A and
sends statement of A's confirmable signature to B

809

Fig. 8

EP 0 955 745 A2

A

B

C Sig $_A$ (M) = (C1, S1, S2)/
Z - K Proof of C Sig $_A$(M) ⟿ 900

Z - K Proof of C Sig $_A$ (M) ⟿ 901

Z - K Proof of C Sig $_A$ (M)
⟿ 902

C Sig $_B$ (M)/Z - K Proof of C Sig $_B$ (M) ⟿ 903

Z - K Proof of C Sig $_B$ (M) ⟿ 904

Z - K Proof of C Sig $_B$ (M)
⟿ 905

Sig $_A$ (M)
⟿ 906

Sig $_B$ (M)
⟿ 907

# Fig 9

A computes confirmable signature on message M, C Sig $_A$ (M) — 1000

A sends confirmable signature to B — 1001

A and B run an interactive Z-K proof protocol to prove if C Sig $_A$ (M) is a confirmable signature — 1002

Proof accepted? — 1003 → No → Stop — 1004

Yes

B computes confirmable signature of B on message, C Sig $_B$ (M) — 1005

B sends confirmable signature on message to A, C Sig $_B$ (M) — 1006

A & B run interactive ZK proof protocol for B to confirm to A the confirmability of B's confirmable signature C Sig $_B$ (M) — 1007

B

Fig. 10a

B

Proof
accepted? ——No——→ Stop
1008                    1009

Yes

A computes ordinary signature of A,
Sig $_A$(M)
1010

A sends ordinary signature of A to B
1011

B receives ordinary signature of A, Sig $_A$ (M)
1012

B verifies whether ordinary signature of A
is valid
1013

Valid
Signature? ——No——→ B refers
to TTP C
1014                    1015

Yes

B computes B's ordinary signature on M, Sig $_B$ (M)
1016

B sends its ordinary signature to A
1017

C

Fig.10b

C

A receives B's ordinary signature, Sig $_B$(M)

1018

A verifies whether B's ordinary signature
Sig $_B$ (M) is valid

1019

Valid
Signature?

No → A refers
to TTP C

1020

1022

Yes

Stop

1021

Fig.10c

Generate C Sig $_A$ (M)

~1100

Select $u \in_R \mathbb{Z}_q^*$

~1101

Compute $\tilde{y} = y^u \bmod p$

~1102

Compute $\hat{y} = z^{xu} \bmod p$

~1103

Generate C Sig $_A$ (M) on message on using u and ux as private keys

~1104

# Fig. 11

ConfA

Demonstrate statement of confirmable signature
to B

1100

Compute $\ddot{y} = z^x \bmod p$

1200

Send $\ddot{y} = z^x \bmod p$ to B

1201

Run interactive ZK protocol with B to prove
$\log_g y = \log_z \ddot{y} \pmod{q}$

1202

Run interactive ZK protocol with B to prove
$\log_y \ddot{y} = \log_{\dot{y}} \hat{y} \pmod{q}$

1203

ConfA
Terminate

# Fig. 12

Fig. 13